# EUROPÄISCHE PATENTSCHRIFT

(11) **EP 1 355 966 B1**
(45) Veröffentlichungstag und Bekanntmachung des Hinweises auf die Patenterteilung: **28.04.2010**
(21) Anmeldenummer: 01984860.5
(22) Anmeldetag: 18.12.2001
(51) Int. Cl.: C08G 18/00

(54) **MIT AKTINISCHER STRAHLUNG AKTIVIERBARE BLENDS AUS KRISTALLINEN UND AMORPHEN VERBINDUNGEN, VERFAHREN ZU IHRER HERSTELLUNG UND IHRE VERWENDUNG**
BLENDS OF CRYSTALLINE AND AMORPHOUS COMPOUNDS WHICH CAN BE ACTIVATED BY ACTINIC RADIATION, METHOD FOR THE PRODUCTION AND USE THEREOF
MELANGES DE COMPOSES CRISTALLINS ET AMORPHES POUVANT ETRE ACTIVES PAR RAYONNEMENT ACTINIQUE, PROCEDE DE FABRICATION ET UTILISATION

(30) Priorität: 18.12.2000 DE 10063159
(43) Veröffentlichungstag der Anmeldung: 29.10.2003
(73) Patentinhaber: Arsonisi S.p.A., 20139 Milano (IT)
(72) Erfinder: HILGER, Christopher, 48151 Münster (DE); BLUM, Rainer, 67069 Ludwigshafen (DE)
(74) Vertreter: Postiglione, Ferruccio
(86) Internationale Anmeldenummer: PCT/EP2001/014913
(87) Internationale Veröffentlichungsnummer: WO 2002/050147

(56) Entgegenhaltungen:
- EP-A- 0 585 742
- EP-A- 0 636 669
- WO-A-99/14254

## Beschreibung

Die vorliegende Erfindung betrifft neue, mit aktinischer Strahlung aktivierbare Blends aus kristallinen und amorphen Verbindungen. Außerdem betrifft die vorliegende Erfindung einen neues Verfahren zur Herstellung von mit aktinischer Strahlung akivierbaren Blends aus kristallinen und amorphen Verbindungen. Des weiteren betrifft die vorliegende Erfindung die Verwendung der neuen oder der nach dem neuen Verfahren hergestellten, mit aktinischer Strahlung aktivierbaren Blends aus kristallinen und amorphen Verbindungen für die Herstellung von Beschichtungsstoffen, Klebstoffen und Dichtungsmassen.

Hier und im folgenden ist unter aktinischer Strahlung elektromagnetische Strahlung wie Röntgenstrahlung, UV-Strahlung, sichtbares Licht oder nahes IR-Licht (NIR), insbesondere UV-Strahlung, oder Korpuskularstrahlung wie Elektronenstrahlen zu verstehen.

Die Beschichtung oder die Lackierung, das Verkleben oder das Abdichten von grundierten oder ungrundierten Substraten mit festen pulverförmigen Beschichtungsstoffen, Klebstoffen oder Dichtungsmassen, die mit aktinischer Strahlung gehärtet werden können, gewinnt zunehmend an Interesse. Grund hierfür sind zu erwartende Vorteile bei Oberflächenglätte und der geringeren thermischen Belastung der Substrate, die sich gegenüber rein thermisch härtbaren Beschichtungsstoffen, Klebstoffen und Dichtungsmassen aus der Trennung von Aufschmelzprozess und Härtungsreaktion ergeben.

In der Praxis treten aber eine Reihe von Problemen auf, die ihre Ursache in der Unvereinbarkeit von Blockfestigkeit der Pulver (vgl. Römpp Lexikon Lacke und Druckfarben, Georg Thieme Verlag, Stuttgart, New York, 1998, »Blockfestigkeit«, Seite 81) und Elastizität der gehärteten Beschichtungen, Klebschichten und Dichtungen haben. Werden die Polymeren so hart eingestellt, daß blockfeste Pulver resultieren, sind die hieraus hergestellten Beschichtungen, Klebschichten und Dichtungen spröde und haften schlecht auf den Substraten. Elastizität der Beschichtungen, Klebschichten und Dichtungen einerseits und Blockfestigkeit der Pulver andererseits kann mit Polymeren eines ausreichend hohen Molekulargewichts erzielt werden. Die Viskosität der Schmelzen wird aber dann so hoch, daß sie nicht mehr gut verlaufen.

Diese Probleme betreffen auch niedermolekulare, oligomere und polymere Urethane, die mit aktinischer Strahlung gehärtet werden können.

Im Rahmen der vorliegenden Ereindung werden unter niedermolekularen und oligomeren Verbindungen Harze verstanden, die mindestens 2 bis 15 Monomereinheiten in ihrem Molekül enthalten. Im Rahmen der vorliegenden Erfindung werden unter Polymeren Harze verstanden, die mindestens 10 Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Polyurethane dieser Art sind beispielsweise aus der deutschen Patentanmeldung DE 24 36 186 A1 oder dem US-Patent US 3,974,303 A bekannt. Hierin sind pulverförmige und thermoplastische Polymere, die 0,5 bis 3,5 polymerisierbare ungesättigte Doppelbindungen pro 1000 Molgewicht aufweisen, und ihre Verwendung als strablenhärtbare Bindemittel beschrieben. Speziell wird ein (meth)acrylatfunktionalisiertes Polyurethan beschrieben, das aus Toluylendiisocyanat, 2-Hydroxyethylmethacrylat und Trimethylolpropan im molaren Verhältnis von 3 : 3 : 1 in der Schmelze hergestellt wird. Das (meth)acrylatfunktionalisierte Polyurethan weist einen Schmelzpunkt von etwa 65°C und einen Gehalt an polymerisierbaren Doppelbindungen von 2,9 Doppelbindungen pro 1.000 Molekulargewicht auf. Es werden indes keine Angaben zur Stabilität der Schmelze gemacht. Es kann als solches als ein mit aktinischer Strahlung härtbarer Pulverlack verwendet werden.

Die europäische Patentanmeldung EP 0 636 669 A1 beschreibt Mischungen aus ungesättigten Polyestern oder (meth)acrylatfunktionalisierten Polyacrylaten, wobei die Polyacrylate in einer konventionellen Polymerisation erhalten werden, und mit Vinylethern oder (Meth)Acrylestern funktionalisierten Polyurethanen als Vernetzungsmitteln. Aus den Beispielen gehen nur Mischungen aus Polyestern und Vinyletherurethanen hervor. Die Vinyletherurethane werden in Chloroform als Lösemittel hergestellt.

Aus der europäischen Patentanmeldung EP 0 410 242 A1 sind Polyurethane bekannt, die (Meth)acryloylgruppen in einer Menge, entsprechend 3 bis 10 Gew.-%, bezogen auf das Polyurethan, an =C=C= (Molekulargewicht 24), enthalten. Diese bekannten Polyurethane weisen nicht näher spezifizierte Schmelzpunkte oder Schmelzintervalle im Temperaturbereich von 50 bis 180°C auf. Für ihre Herstellung werden Isophorondiisocyanat, 4,4'-Diisocyanatodicyclohexylmethan, 4,4'-Diisocyanatodiphenylmethan, dessen technische Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol (Toluylendiisocyanat) sowie Biuret-, Isocyanurat- oder Urethan-modifizierte Polyisocyanate auf Basis dieser einfachen Polyisocyanate verwendet. Es ist schwierig, auf der Basis dieser Polyisocyanate Polyurethane herzustellen, die ein besonders enges Schmelzintervall oder gar einen definierten Schmelzpunkt aufweisen. Insbesondere führt die Verwendung von Polyisocyanaten mit einer mittleren Funktionalität >2 zu Polyurethanen einer unerwünscht breiten Molekulargewichtsverteilung, so daß sie in strahlenhärtbaren Pulverlacken nur bedingt verwendbar sind. Einige der in den Beispielen genannten Polyurethane weisen zwar einen Beginn der Erweichung bei praktikablen Temperaturen von 85-95°C auf, durch ihre hohe Verzweigung ist aber bei diesen Temperaturen die Schmelzeviskosität für ihre Verwendung in strahlenhärtbaren Pulverlacken zu hoch. Desweiteren werden die Polyurethane in Ethylacetat als Lösemittel hergestellt, wonach das Lösemittel bei niedrigen Temperaturen im Vakuum verdampft werden muß.

Aus der europäischen Patentschrift EP 0 783 534 A1 gehen (meht)acrylatfunktionalisierte Polyurethane hervor, die unter Mitverwendung von monofunktionellen Hydroxyverbindungen ohne ungesättigte Gruppen erhalten werden. Dadurch wird zwar die Viskosität gesenkt, aber durch diese nichtreaktiven terminalen Gruppen die Reaktivität bei der Härtung mit aktinischer Strahlung abgesenkt. Gewünscht sind indes mit Peroxiden thermisch vernetzte Lackierungen.

Aus der internationalen Patentanmeldung WO 99/14254 sind Mischungen aus ungesättigten Harzen und Vernetzungsmitteln bekannt, wobei die Vernetzungsmittel kristalline Polyurethane sind, die Vinyl-, Allyl- oder Crotylethergruppen enthalten, Ggf. können, noch Vernetzungsmittel mit verwendet werden, die (Meth)Acrylatgruppen enthalten.

Aus der europäischen Patentanmeldung EP 0 702 040 A1 sind Polyester bekannt, die in der Polymerhauptkette eine geringe Anzahl an Doppelbindungen, die über Maleinsäure oder Maleinsäureanhydrid eingebaut wurden, enthalten. Die Polyester enthalten endständige Acrylatgruppen, die über die Reaktion der Hydroxylendgruppen der Polyesterzwischenstufe mit Diisocyanaten und hydroxylgrlippenhaltigen Acrylaten erhalten wurden. Diese mit aktinischer Strahlung härtbaren Polyester sind indes vergleichsweise hochmolekular.

Die europäische Patentanmeldung EP 0 585 742 A1 beschreibt Bindemittel für Pulverlacke bestehend aus A) einem festen, ungesättigten Polyester und B) einem (Meth)Acryloylgruppen enthaltenden Polyurethan. Diese Mischungen mit einem Gehalt an Polyester sollen sich durch eine verbesserte Blockstabilität gegenüber dem Polyurethan für sich allein auszeichnen. Sofern es sich bei den vom Stand der Technik her bekannten, vinyl- und/oder acryloylgruppenhaltigen Polyurethanen um kristalline, niedermolekulare oder oligomere Verbindungen handelt, weisen sie einen vorteilhaft niedrigen Schmelzpunkt und eine vorteilhaft niedrige Viskosität auf. Sie sind zwar auch blockfest kristallin, haben aber eine wachsartig-fettige Konsistenz und lassen sich dehalb nicht extrudieren und nur unter sehr starker Kühlung mahlen.

Mit steigendem Molekulargewicht werden Mahlbarkeit und Extrudierbarkeit zwar besser, indes erhöhen sich der Schmelzpunkt und die Schmelzeviskosität derart, daß die Polyurethane nicht mehr als Pulverlacke oder als Bindemittel für Pulverlacke in Betracht kommen.

Auch die bisher bekannten Mischungen aus niedermolekularen, oligomeren oder polymeren vinylether- oder acrylatgruppenhaltigen Urethanen und ungesättigten Polyesterharzen oder acryloylgruppenhaltigen Polyacrylaten können das Problem der Unvereinbarkeit von Blockfestigkeit der Pulver und Elastizität der hieraus hergestellten Beschichtungen nicht lösen. Dies liegt vermutlich daran, daß die Polyurethane mit den Polyestern und den Poylacrylaten verträglich sind, so daß sie wie Lösemittel oder Weichmacher wirken und die Glasübergangstemperatur der Polyester und Poylacrylate zu stark herabsetzen. Dem kann zwar durch die Erhöhung des Molekulargewichts entgegengesteuert werden, was aber die Schmelzeviskosität in unerwünschtem Maße erhöht und den Verlauf der Schmelzen verschlechtert.

Die vorstehend geschilderten Probleme treten auch bei Klebstoffen und Dichtungsmassen sowie bei den hieraus hergestellten Klebschichten und Dichtungen in gleicher oder ähnlicher Weise auf.

Aufgabe der vorliegenden Erfindung ist es, neue mit aktinischer Strahlung härtbare Feststoffe bereitzustellen, die die Nachteile des Standes der Technik nicht mehr länger aufweisen, sondern die als Pulver blockfest sind und einen niedrigen Schmelzpunkt und eine niedrige Schmelzeviskosität aufweisen und nach ihrer Applikation auf grundierte und ungrundierte Substrate elastische Beschichtungen, Klebschichten und Dichtungen mit sehr guten mechanischen Eigenschaften liefern.

Außerdem war es die Aufgabe der vorliegenden Erfindung ein neues Verfahren zur Herstellung von mit aktinischer Strahlung härtbaren Feststoffen bereitzustellen, das in einfacher Weise blockfeste Pulver mit niedrigem Schmelzpunkt und niedriger Schmelzevikosität liefert, die nach ihrer Applikation auf grundierte und ungrundierte Substrate elastische Beschichtungen, Klebschichten und Dichtungen mit sehr guten mechanischen Eigenschaften liefern.

Demgamäß wurde der neue mit aktinischer Strahlung aktivierbare, bei Raumtemperatur feste Blend, enthaltend
(A) mindestens eine kristalline Verbindung, enthaltend im statistischen Mittel mindestens eine reaktive funktionelle Gruppe mit mindestens einer mit aktinischer Strahlung aktivierbaren Bindung im Molekül, und
(B) mindestens eine amorphe Verbindung, enthaltend im statistischen Mittel mindestens eine reaktive funktionelle Gruppe mit mindestens einer mit aktinischer Strahlung aktivierbaren Bindung im Molekül,
gefunden, wobei die Verbindung (A) herstellbar ist, indem man
- mindestens ein lineares Diisocyanat mit
- mindestens einer Verbindung mit mindestens zwei isocyanatreaktiven Gruppen und
- mindestens einer Verbindung mit mindestens einer isocyanatreaktiven Gruppe und mindestens einer reaktiven funktionellen Gruppe mit mindestens einer mit aktinischer Strahlung aktivierbaren Bindung
umsetzt; die Verbindung (B) herstellbar ist, indem man
- mindestens ein nicht lineares Diisocyanat mit
- mindestens einer Verbindung mit mindestens zwei isocyanatreaktiven Gruppen und
- mindestens einer Verbindung mit mindestens einer isocyanatraktiven Gruppe und mindestens einer reaktiven funktionellen Gruppe mit mindestens einer mit aktinischer Strahlung aktivierbaren Bindung
umsetzt; die Verbindungen (A) und (B) niedermolekular und/oder oligomer sind; die funktionellen Gruppen mit mindestens einer mit aktinischer Strahlung aktivierbaren Bindung über Urethangruppen an die Grundstrukturen der Verbindungen (A) und (B) gebunden sind; und die mit aktinischer Strahlung aktivierbaren Bindungen in reaktiven funktionellen Gruppen, ausgewählt aus der Gruppe bestehend aus (Meth)acrylat-, Ethacrylat-, Crotonat-, Cinnamat-, Vinylether-, Vinylester-, Dicyclopentadienyl-, Norbornenyl-, Isoprenyl-, Isopropenyl-, Allyl-, Butenyl-, Butenylether- und Butenylestergruppen, enthalten sind,
und der im folgenden als "erfindungsgemäßer Blend" bezeichnet wird. Außerdem wurde das neue Verfahren zur Herstellung des erfindungsgemäßen Blends mit Hilfe eines mehrstufigen Verfahrens gefunden, bei dem man
(I) in einer ersten Variante in mindestens einer ersten Stufe mindestens eine Verbindung (B) herstellt, wonach man in mindestens einer zweiten Stufe mindestens eine Verbindung (A) in der Verbindung (B) oder in den Verbindungen (B) als Reaktionsmedium herstellt, oder
(II) in einer zweiten Variante in mindestens einer ersten Stufe mindestens eine Verbindung (A) herstellt, wonach man in mindestens einer zweiten Stufe mindestens eine Verbindung (B) in der Verbindung (A) oder den Verbindungen (A) als Reaktionsmedium herstellt,
und das im folgenden als "erfindungsgemäßes Verfahren" bezeichnet wird.

Der erfindungsgemäße Blend enthält mindestens eine kristalline Verbindung (A)₁ wobei die Verbindung (A) herstellbar ist, indem man
- mindestens ein lineares Diisocyanat mit
- mindestens einer Verbindung mit mindestens zwei isocyanatreaktiven Gruppen und
- mindestens einer Verbindung mit mindestens einer isocyanatreaktiven Gruppe und mindestens einer reaktiven funktionellen Gruppe mit mindestens einer mit aktinischer Strahlung aktivierbaren Bindung
umsetzt; die Verbindung (A) niedermolekular und/oder oligomer ist; die funktionellen Gruppen mit mindestens einer mit aktinischer Strahlung aktivierbaren Bindung über Urethangruppen an die Grundstruktur der Verbindung (A) gebunden sind; und die mit aktinischer Strahlung aktivierbaren Bindungen in reaktiven funktionellen Gruppen, ausgewählt aus der Gruppe bestehend aus (Meth)acrylat-, Ethacrylat-, Crotonat-, Cinnamat-, Vinylether-, Vinylester-, Dicyclopentadienyl-, Norbornenyl-, Isoprenyl-, Isopropenyl-, Allyl-, Butenyl-, Butenylether- und Butenylestergruppen, enthalten sind. Die Verbindung (A) enthält im statistischen Mittel mindestens eine, vorzugsweise mindestens zwei, insbesondere zwei, reaktive funktionelle Gruppe(n) mit mindestens einer mit aktinischer Strahlung aktivierbaren Bindung im Molekül. Im folgenden wird diese reaktive funktionelle Gruppe der Kürze halber auch als strahlungsaktiverbare Gruppe bezeichnet. Die in einer gegebenen Verbindung (A) vorhandenen strahlungsaktivierbaren Gruppen können gleich oder voneinander verschieden sein. Vorzugsweise werden strahlungsaktiverbare Gruppen der gleichen Art verwendet.

Unter einer mit aktinischer Strahlung aktivierbaren Bindung wird eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen.

Kohlenstoff-Kohlenstoff-Doppelbindungen sind besonders vorteilhaft und werden der Kürze halber im folgenden als "Doppelbindungen" bezeichnet.

Demnach enthalten besonders vorteilhafte strahlungsaktivierbare Gruppen eine Doppelbindung oder zwei, drei oder mehr Doppelbindungen. Werden mehr als eine Doppelbindung verwendet, können die Doppelbindungen konjugiert sein.

Erfindungsgemäß ist es indes von Vorteil, wenn die Doppelbindungen isoliert, insbesondere jede für sich endständig, in der strahlungsaktivierbaren Gruppe vorliegen. Erfindungsgemäß ist es von besonderem Vorteil zwei, insbesondere eine, Doppelbindung zu verwenden.

Geeignete strahlungsaktivierbare Gruppen sind (Meth)acrylat-, Ethacrylat, Crotonat-, Cinnamat-, Vinylether-, Vinylester-, Dicyclopentadienyl-, Norbornenyl-, Isoprenyl-, Isoprenyl-, Isopropenyl-, Allyl- oder, Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isopenyl-, Isopropenyl-, Allyl- oder Butenylestergruppen, insbesondere Acrylatgruppen.

Liegen in der Verbindung (A) von einander verschiedene strahlungsaktivierbare Gruppen vor, kann es sich beispielsweise um Kombinationen von
- (Meth)acrylatgruppen und
   Ethacrylat-, Crotonat-, Cinnamat-, Vinylether-, Vinylester-, Dicyclopentadienyl-, Norbornenyl-, Isoprenyl-, Isopropenyl-, Allyl- und/oder Butenylgruppen; Dicyclopentadienyl-, Norbornenyl-, Isoprenyl-, Isopropenyl, Allyl, und/oder Butenylethergruppen und/oder Dicyclopentadienyl-, Norbornenyl-, Isoprenyl-, Isopropenyl-, Allyl- und/oder Butenylestergruppen;
- Cinnamatgruppen und
   (Meth)acrylat-, Ethacrylat-, Crotonat-, Vinylether-, Vinylester-, Dicyclopentadienyl-, Norbornenyl-, Isoprenyl-, Isopropenyl-, Allyl- und/oder Butenylgruppen; Dicyclopentadienyl-, Norbornenyl-, Isoprenyl-, Isopropenyl-, Allyl- und/oder Butenylethergruppen und/oder Dicyclopentadienyl, Norbornenyl-, Isoprenyl-, Isopropenyl-, Allyl- und/oder Butenylestergruppen;
- Vinylethergruppen und
   (Meth)acrylat-, Ethacrylat-, Crotonat-, Cinnamat-, Vinylester-, Dicyclopentadienyl-, Norbornenyl-, Isoprenyl-, Isopropenyl-, Allyl- und/oder Butenylgruppen; Dicyclopentadienyl-, Norbornenyl-, Isoprenyl-, Isopropenyl-, Allyl- und/oder Butenylethergruppen und/oder Dicyclopentadienyl-, Norbornenyl-, Isoprenyl-, Isopropenyl-, Allyl- und/oder Butanylestergruppen; oder um
- Allylgruppen und
   (Meth)acrylat-, Ethacrylat-, Crotonat-, Cinnamat-, Vinylether-, Vinylester-, Dicyclopentadienyl-, Norbornenyl-, Isoprenyl-, Isopropenyl-, und/oder Butenylgruppen; Dicyclopentadienyl-, Norbornenyl-, Isoprenyl-, Isopropenyl-, Allyl- und/oder Butenylethergruppen und/oder Dicyclopentadienyl-, Norbornenyl-, Isoprenyl-, Isopropenyl-, Allyl- und/oder Butenylestergruppen
handeln.

Bevorzugt sind in diesem Fall die Kombinationen der (Meth)acrylatgruppe, insbesondere der Acrylatgruppe, mit mindestens einer, insbesondere einer, weiteren Art von strahlungsaktivierbaren Gruppe.

Vorzugsweise liegen die strahlungsaktivierbaren Gruppen lateral und/oder seitenständig in den Verbindungen (A) vor. Häufig haben endständige strahlungsakivierbare Gruppen wegen fehlender sterischer Abschirmung eine höhere Reaktivität als laterale Gruppen und werden deshalb bevorzugt verwendet. Anderseits aber kann die Reaktivität der Verbindung (A) über das Verhältnis von endständigen und lateralen Gruppen gezielt gesteuert werden.

Die ggf. vorhandenen Photoinitiatoren, Photocoinitiatoren, stabilisierenden Gruppen usw. können über beliebige zweibindige Gruppen mit den Grundstrukturen der Verbindungen (A) verbunden sein. Vorzugsweise sind sie über Urethan-, Ester-, Ether- und/oder Amidgruppen, insbesondere Urethangruppen, an die Grundstrukturen der Verbindungen (A) gebunden.

Die strahlungsaktiverbaren Gruppen sind über Urethangruppen an die Grundstruktur der Verbindung (A) gebunden. Es kommen die folgenden beiden verknüpfenden Strukturen I und II in Betracht:

**Grundstruktur-NH-C(O)-O-Gruppe** (I)

und

**Grundstruktur-O-(O)C-NH-Grruppe** (II).

In der Verbindung (A) können beide verküpfende Strukturen I und II oder nur eine von ihnen vorliegen. Im allgemeinen ist die Struktur I wegen der größeren Anzahl der zur Verfügung stehenden Ausgangsprodukte und deren vergleichsweise einfacheren Herstellbarkeit von Vorteil und wird deshalb erfindungsgemäß bevorzugt angewandt.

Die Verbindung (A) kann des weiteren chemisch gebundenen Photoinitiatoren und/oder Photocoinitiatoren enthalten, die insbesondere lateral mit der Grundstruktur der Verbindung (A) verknüpft sind. Beispiele geeigneter chemisch gebundener Photoinitiatoren sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Band 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide. Ein Beispiel für einen geeigneten Photocoinitiator ist Anthracen. Wenn die chemisch gebundenen Photoinitiatoren und/oder Photocoinitiatoren mit verwendet werden, sind sie in der Verbindung (A) in einer Menge, entsprechend im statistischen Mittel 0,01 bis 2,0 gebundenen Photoinitiatoren und/oder Photocoinitiatoren pro Molekül, enthalten.

Außerdem kann die Verbindung (A) noch mindestens einen chemisch an die Grundstruktur gebunden Stabilisator enthalten. Sofern verwendet, enthält die Verbindung (A) 0,01 bis 1,0 Mol-%, bevorzugt 0,02 bis 0,9 Mol-%, besonders bevorzugt 0,03 bis 0,85 Mol-%, ganz besonders bevorzugt 0,04 bis 0,8 Mol-%, und insbesondere 0,05 bis 0,75 Mol-%, speziell 0,06 bis 0,7 Mol-%, jeweils bezogen auf die in der Verbindung (A) vorhandenen mit aktinischer Strahlung aktivierbaren Bindungen, insbesondere Doppelbindungen, des chemischen gebundenen Stabilisators.

Bei dem chemisch gebundenen Stabilisator handelt es sich um Verbindungen, die sterische gehinderte Nitroxylradikale (>N-O•) sind oder liefern, die im modifizierten Denisov-Zyklus freie Radikale abfangen.

Beispiele geeigneter chemisch gebundener Stabilisatoren sind HALS-Verbindungen, vorzugsweise 2,2,6,6-Tetraalkylpiperidinderivate, insbesondere 2,2,6,6-Tetramethylpiperidinderivate, deren Stickstoffatom mit einem Sauerstoffatom, einer Alkylgruppe, Alkylcarbonylgruppe oder Alkylethergruppe substituiert ist. Ergänzend wird auf das Lehrbuch »Lackadditive« von Johan Bieleman, Wiley-VCH, Weinheim, New York, 1998, Seiten 293 bis 295, verwiesen.

Des weiteren kann die Verbindung (A) mit der Grundstruktur verbundene Gruppen der Formel III: 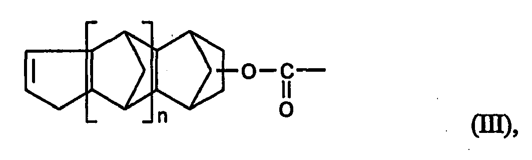 enthalten, worin der Index n eine ganze Zahl von 1 bis 10 bedeutet.

Ferner kann die Verbindung (A) Endomethylentetrahydrophthalsäurestrukturen der Formel IV: 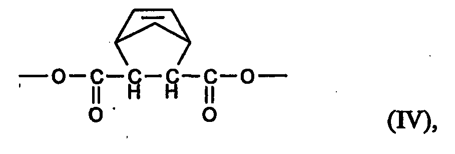 in der Grundstruktur enthalten.

Nicht zuletzt kann die Verbindung (A) an die Grundstruktur gebundene laterale reaktive funktionelle Gruppen tragen, die mit reaktiven funktionellen Gruppen der eigenen Art oder mit anderen, komplementären, funktionellen Gruppen radikalisch, ionisch und/oder thermisch initiierte Vernetzungsreaktionen eingehen können. Hierbei können die komplementären funktionellen Gruppen in ein und derselben Grundstruktur vorliegen, was bei sogenannten selbstvernetzenden Systemen der Fall ist. Die eine Art der funktionellen Gruppen kann indes auch in einer weiteren Verbindung (A) und/oder (B) oder in einem hiervon verschiedenen Bestandteil, beispielsweise einem Vernetzungsmittel, vorliegen, was bei sogenannten fremdvernetzenden Systemen der Fall ist. Ergänzend wird auf Römpp Lexikon Lacke und Druckfarben, Georg Thieme Verlag, Stuttgart, New York, 1998, »Härtung«, Seiten 274 bis 276, verwiesen. Reaktive funktionelle Gruppen dieser Art werden insbesondere dann verwendet, wenn der erfindungsgemäße Feststoff mit aktinischer Strahlung und thermisch härtbar sein soll (Dual Cure). Sie werden so ausgewählt, daß sie die mit aktinischer Strahlung initiierte Polymerisation oder Vernetzungsreaktion der Doppelbindungen der strahlungsaktivierbaren Gruppen nicht stören oder gar völlig verhindern. Indes können reaktive funktionelle Gruppen für die thermische Vernetzung, die an olefinisch ungesättigte Doppelbindungen addieren, in untergeordneten, d. h. in nicht störenden, Mengen mit verwendet werden.

Beispiele geeigneter komplementärer reaktiver funktioneller Gruppen für die thermische Vernetzung gehen aus der nachfolgenden Übersicht hervor. In der Übersicht steht die Variable R für einwertige organische Reste. Die Variablen R' und R" stehen für einwertige organische Reste oder sind cyclisch miteinander verknüpft.

### Übersicht: Beispiele komplementärer funktioneller Gruppen für die thermische Vernetzung

| | |
|---|---|
| -SH | -C(O)-OH |
| -NH₂ | -C(O)-O-C(O)- |
| -OH | -NCO |
| -O-(CO)-NH-(CO)-NH₂ | NH-C(O)-OR |
| -O-(CO)-NH₂ | -CH₂-OH |
| >NH | -CH₂-O-R |
| | -NH-CH₂-O-R |
| | -NH-CH₂-OH |
| | -N(-CH₂-O-R)₂ |
| | -NH-C(O)-CH(-C(O)OR)₂ |
| | -NH-C(O)-CH(-C(O)OR)(-C(O)-R) |
| | -NH-C(O)-NR-'R" |
| | > Si(OR)₂ |
| | 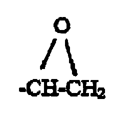 |
| | 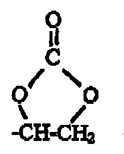 |
| -C(O)-OH | 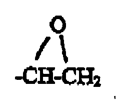 |
| | 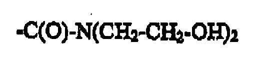 |

Die Grundstruktur der Verbindung (A) ist niedermolekular und/oder oligomer.

Die Grundstruktur der Verbindung (A) ist linear, weswegen auch die Verbindung (A) linear ist.

Die niedermolekulare oder oligomere
Grundstruktur enthält lineare aromatische, cycloaliphatische und/oder aliphatische Strukuren bzw. Bausteine oder besteht aus diesen. Vorzugsweise enthält sie cycloaliphatische und/oder aliphatische Strukturen, insbesondere aliphatische Strukturen, oder besteht aus diesen.

Beispiele geeigneter linearer aromatischer Strukturen sind aromatische und heteroaromatische Ringe mit einer geradzahligen Anzahl von Atomen, insbesondere Benzolringe, die direkt oder indirekt in Parastellung miteinander verknüpft sind.

Beispiele geeigneter linearer cycloaliphatischer Stukturen sind Ringe mit einer geradzahligen Anzahl von Atomen, vorzugsweise Cyclobutan-, Cyclohexan- oder Cyclooctanringe, insbesondere Cyclohexanringe, die direkt oder indirekt in Parastellung miteinander verknüpft sind.

Beispiele aliphatischer Strukturen sind linerare, insbesondere geradzahlige, Alkylketten mit 2 bis 20 Kohlenstoffatomen oder Ketten, wie sie aus der (Co)Polymerisation olefinisch ungesättigter Monomere resultieren.

Die Grundstruktur, insbesondere die oligomere
Grundstruktur, kann außerdem olefinisch ungesättigte Doppelbindungen enthalten.

Vorzugsweise werden aliphatische und/oder cycloaliphatische, insbesondere aliphatische, Strukturen verwendet.

Die Grundstruktur kann zweibindige funktionelle Gruppen enthalten, durch die die vorstehend beschriebenen Strukturen bzw. Bausteine miteinander zu der Grundstruktur verknüpft werden. Diese werden im allgemeinen so ausgewählt, daß sie die durch aktinische Strahlung sowie ggf. thermisch initiierten Reaktionen nicht stören oder gar völlig verhindern. Beispiele geeigneter funktioneller Gruppen sind Ether-, Thioether-, Carbonsäureester-, Thiocarbonsäureester-, Carbonat-, Thiocarbonat-, Phosphorsäureester-, Thiophosphozsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Urethan-, Hydrazid-, Harnstoff-, Thioharnstoff-, Carbonyl-, Thiocarbonyl-, Sulfon-, Sulfoxid- oder Siloxangruppen. Von diesen Gruppen sind die Ether-, Carbonsäureester-, Carbonat-, Carbonsäureamid-, Harnstoff-, Urethan-, Imid- und Carbonatgruppen, insbesondere die Carbonsäureester- und die Urethangruppen, von Vorteil und werden deshalb bevorzugt verwendet.

Vorteilhafte niedermolekulare und oligomers
Grundstrukturen leiten sich somit ab von statistisch, alternierend und/oder blockartig aufgebauten, linearen (Co)Polymerisaten von ethylenisch ungesättigten Monomeren, linearen Polyadditionsharzen und/oder linearen Polykondensationsharzen. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Beispiele gut geeigneter (Co)Polymerisate sind Poly(meth)acrylate und partiell verseifte Polyvinylester.

Beispiele gut geeigneter Polyadditionsharze und/oder Polykondensationsharze sind Polyester, Alkyde, Polyurethane, Polyester-Polyurethane, Polylactone, Polycarbonate, Polyether, Polyester-Polyether, Epoxidharz-Amin-Addukte, Polyharnstoffe, Polyamide oder Polyimide. Von diesen sind die Polyester, Polyester-Polyether, Polyurethane, inclusive Polyether-, Polyester-, und/oder Polyether-Polyester-Polyurethane, insbesondere aber die Polyurethane, besonders vorteilhaft und werden deshalb erfindungsgemäß ganz besonders bevorzugt verwendet.

Die Herstellung der erfindungsgemäß zu verwendenden linearen Grundstrukturen weist keine methodischen Besonderheiten auf, sondern erfolgt mit Hilfe der üblichen und bekannten Synthesemethoden der niedermolekularen organischen Chemie und/oder der Polymerchemie. Was die erfindungsgemäß ganz besonders bevorzugten oligomeren Grundstrukturen betrifft, die sich von Polyestern, Polyester-Polyethern oder Polyurethanen, insbesondere aber Polyurethanen, ableiten, werden die üblichen und bekannten Methoden der Polyaddition und/oder Polykondensation angewandt. Dabei werden Ausgangsprodukte eingesetzt, die die vorstehend beschriebenen Gruppen in die Grundstrukturen einbauen.

Die ganz besonders bevorzugten niedermolekularen und oligomeren Urethane werden vorzugsweise aus
- linearen aliphatischen und/oder cycloaliphatischen, insbesondere aliphatischen, Verbindungen, die zwei isocyanatreaktive funktionelle Gruppen enthalten, und
- linearen Diisocyanaten
hergestellt. Hierbei werden die Verbindungen mit den zwei isocyanatreaktiven funktionellen Gruppen und die Diisocyanate in Molverhältnissen angewandt, daß mit isocyanatreaktiven funktionellen Gruppen terminierte oder isocyanatgruppenterminierte, insbesondere isocyanatgruppenterminierte, lineare niedermolekulare und oligomere Urethane resultieren.

Beispiele geeigneter isocyanatreaktiver funktioneller Gruppen sind Hydroxyl-, Thiol-, primäre oder sekundäre Amino- oder Iminogruppen, insbesondere Hydroxylgruppen.

Beispiele geeigneter Verbindungen mit zwei isocyanatreaktiven funktionellen Gruppen sind demnach niedermolekulare oder oligomere Diole, Wasser, welches bekanntermaßen mit zwei Isocyanatgruppen unter Abspaltung von Kohlendioxid zu einer Harnstoffgruppe reagiert, Diamine und Aminoalkohole.

Beispiele geeigneter Diamine sind Ethylendiamin, Trimethylendiamin, Tetramethylendiamin oder Hexamethylendiamin.

Beispiele geeigneter Aminoalkohole sind Ethanolamin oder Propanolamin.

Beispiele geeigneter linearer Diole sind niedermolekulare Diole wie Ethylengylkol, 1,4-Butylenglykol, 1,6-Hexandiol, 1,4-Cyclohexandiol, 1,4-Cyclohexandimethanol, Dicyclohexanolpropan, Diethylenglykol, Dipropylenglykol oder Dibutylenglykol.

Beispiel geeigneter oligomerer Diole sind Triethylenglykol, Polyethylenglykol, Polyproylenglykol, Poly(co-ethylen-co-propylenglykol) oder Tetrahydrofuran eines zahlenmittleren Molekulargewichts von mehr als 500 Dalton, insbesondere solche mit einer engen Molekulargewichtsverteilung, die auch als Polyetherdiole bezeichnet werden.

Außerdem sind Diole geeignet, die mindestens eine, insbesondere eine, der vorstehend beschriebenen strahlungsaktivierbaren Gruppe(n) enthalten. Sie dienen der Einführung lateraler strahlungsaktivierbarer Gruppen in die niedermolekularen und oligomeren Urethane. Beispiele geeigneter Diole dieser Art sind Trimethylolpropan-monoacrylat oder-monoallyläther.

Die vorstehend beschriebenen Diole, Diamine und Aminoalkohole können als solche für die Herstellung der Polyurethane verwendet werden. Sie können aber auch für die Herstellung der nachstehend beschriebenen Polyesterdiolen eingesetzt werden.

Weitere Beispiele geeigneter Diole sind lineare, oligomere, aliphatische Polyesterdiole.

Bekanntermaßen sind lineare aliphatische Polyesterdiole erhältlich durch Umsetzung von linearen aliphatischen Dicarbonsäuren oder der veresterungsfähigen Derivate dieser Carbonsäuren, wie die Anhydride - sofern existent - oder die Methyl-, Ethyl-, Propyl- oder Butylester, mit Diolen.

Beispiele geeigneter linearer aliphatischer Dicarbonsäuren sind 1,3-Cyclobutandicarbonsäure, 1,4-Cyclohexandicarbonsäure, Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure.

Soll das lineare Polyesterdiol in seiner Kette Doppelbindungen enthalten, werden ungesättigte Dicarbonsäuren, insbesondere Maleinsäure und/oder Fumarsäure, insbesondere Maleinsäure, eingesetzt. Die in die Ketten eingebauten Maleinsäureeinheiten können dann durch Umsetzung mit Cyclopentadien zu den vorstehend beschriebenen Endomethylentetrahydrophthalsäureeinheiten (IV) umgesetzt werden.

Beispiele geeigneter linearer aliphatischer Diole für die Herstellung der linearen Polyesterdiole sind die vorstehend beschriebenen Diole.

Die Herstellung der linearen aliphatischen Polyesterdiole weist keine methodischen Besonderheiten auf, sondern erfolgt nach den üblichen und bekannten Methoden der Polyesterchemie vorzugsweise in Gegenwart geringer Mengen eines geeigneten Lösemittels als Schleppmittel. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter oligomere linearer aliphatischer Polyesterdiole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR¹)ₘ- CH₂-O-)- aus. Hierbei ist der Index m bevorzugt 4 bis 6 und der Substitutent R¹ = Wasserstoff oder ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole dieser Art wird das unsubstituierte ### -Caprolacton, bei dem m den Wert 4 hat und alle R¹-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ###-Caprolactam mit niedermolekularen Diolen hergestellt werden.

Beispiele für gut geeignete lineare aliphatische Polyesterdiole der vorstehend beschriebenen Art sind die Polycaprolactondiole, die unter der Marke CAPA® der Firma Solvay Interox vertrieben werden.

Beispiele besonders gut geeigneter linearer Diisocyanate sind Tetramethylendiisocyanat-(1,4), Hexamethylendiisocyanat-(1,6), Octan-1,8-diyl-diisocyanat, Decan-1,10-diyl-diisocyanat, Dodecan-1,12-diyl-diisocyanat, Tetradecan-1,14-diyl-diisocyanat, Cyclohexan-1,4-diyl-diisocyanat oder 1,4-Bis(isocyanatomethyl)cyclohexan.

Weitere Beispiele besonders gut geeigneter linearer Diisocyanate sind lineare oligomere Diisocyanate, die erhältlich sind durch die Umsetzung mindestens eines der vorstehend beschriebenen monomeren Diisocyanate mit mindestens einer der vorstehend beschriebenen, zwei isocyanatreaktive funktionelle Gruppen enthaltenden Verbindung. Hierbei werden die molaren Verhältnisse bekanntermaßen derart gewählt, daß mit Isocyanatgruppen terminierte Vorstufen für die Verbindung (A) resultieren.

Die Einführung der endständigen, mit aktinischer Strahlung aktivierbaren Gruppen in die mit isocyanatreaktiven funktionellen Gruppen terminierten niedermolekularen und oligomeren Urethane erfolgt mit Hilfe von Verbindungen, die eine Isocyanatgruppe und mindestens eine, insbesondere eine, mit aktinischer Strahlung aktivierbare Gruppe enthalten. Hierbei resultieren die verknüpfenden Strukturen II. Ein Beispiel für eine geeignete Verbindung dieser Art ist 1-(1-Isocyanato-1-methylethyl)-3-(1-methylethenyl)-benzol, das unter der Marke TMI® von der Firma CYTEC vertrieben wird.

Die Einführung der endständigen, mit aktinischer Strahlung aktivierbaren Gruppen in die mit Isocyanatgruppen terminierten Polyurethane erfolgt mit Hilfe von Verbindungen, die eine isocyanatreaktive funktionelle Gruppe und mindestens eine, insbesondere eine, mit aktinischer Strahlung aktivierbare Gruppe enthalten. Hierbei resultieren die verknüpfenden Strukturen I.

Beispiele besonders gut geeigneter Verbindungen dieser Art sind übliche und bekannte Monomere, welche eine Hydroxylgruppe pro Molekül tragen, wie
- Allylalkohol;
- Hydroxyalkylester der Acrylsäure oder der Methacrylsäure, insbesondere der Acrylsäure, die durch Veresterung aliphatischer Diole, beispielsweise der vorstehend beschriebenen niedermolekularen Diole B), mit Acrylsäure oder Methacrylsäure oder durch Umsetzung von Acrylsäure oder Methacrylsäure mit einem Alkylenoxid erhältlich sind, insbesondere Hydroxyalkylester der Acrylsäure oder Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Bis(hydroxymethyl)cyclohexanacrylat oder methacrylat; oder
- Umsetzungsprodukte aus cyclischen Estern, wie z.B. epsilon-Caprolacton, und diesen Hydroxyalkyl- oder -cycloalkylestern.

Die niedermolekularen und oligomeren Urethane werden vorzugsweise hergestellt, indem man
(1) mindestens eines der vorstehend beschriebenen Diisocyanat mit mindestens einem der Monomeren im Molverhältnis Diisocyanat : Monomer = 1 : 1 zu einem eine Isocyanatgruppe und eine olefinisch ungesättigte Gruppe enthaltenden Addukt umsetzt, wonach man
(2) das Addukt mit mindestens einer der vorstehend beschriebenen Verbindungen mit zwei isocyanatreaktiven Gruppen in einem Molverhältnis Addukt : Verbindung = 2 : 1 zu den Verbindungen (A) bzw. den niedermolekularen und oligomeren Urethanen (A) umsetzt.

Nach einer weiteren vorteilhaften Variante werden die niedermolekularen und oligomeren Urethane (A) hergestellt, indem man
(1) mindestens eines der vorstehend beschriebenen Diisocyanate mit mindestens einer der vorstehend beschriebenen Verbindungen mit zwei isocyanatreaktiven Gruppen in einem Molverhältnis von 2 : 1 zu einem Addukt mit zwei endständigen Isocyanatgruppen umsetzt, wonach man
(2) das Addukt mit mindestens einer der vorstehend beschriebenen Monomeren in einem Molverhältnis von 1: 2 zu den aliphatischen niedermolekularen und oligomeren Urethanen (A) umsetzt.

Die gegebenenfalls vorhandenen an die Grundstruktur gebundenen Photoinitiatoren, Photocoinitiatoren, stabilisierenden Verbindungen und/oder komplementären reaktiven funktionellen Gruppen für die thermische Vernetzung können in vergleichbarer Weise in die Verbindungen (A), insbesondere in die niedermolekularen und oligomeren Urethane (A), eingeführt werden.

Zur Einführung von lateralen Gruppen in die Polyurethane (A) werden hierbei Verbindungen eingesetzt, die zwei isocyanatreaktive Gruppen und mindestens eine entsprechende funktionelle Gruppe enthalten. Sollen in ständige Gruppen in die niedermolekularen und oligomeren Urethane (A) eingeführt werden, enthalten die Verbindungen nur eine isocyanatreaktive Gruppe.

Beispiele geeigneter Ausgangsprodukte für die Einführung von beispeilsweise chemisch gebundenen Stabilisatoren sind HALS-Verbindungen, vorzugsweise 2,2,6,6-Tetraalkylpiperidinderivate, insbesondere 2,2,6,6-Tetramethylpiperidinderivate, deren Stickstoffatom mit einem Sauerstoffatom, einer Alkylgruppe, Alkylcarbonylgruppe oder Alkylethergruppe substituiert ist und die eine Isocyanatgruppe oder eine isocyanatreaktive funktionelle Gruppe, insbesondere eine Hydroxylgruppe, enthalten. Ein Beispiel für ein besonders gut geeignetes Ausgangsprodukt ist das Nitroxylradikal 2,2,6,6-Tetramethyl-4-hydroxy-piperidin-N-oxid.

Das Beispiel eines geeigneten Ausgangsprodukts zur Einführung einer Gruppe der Formel III ist die Verbindung III-1 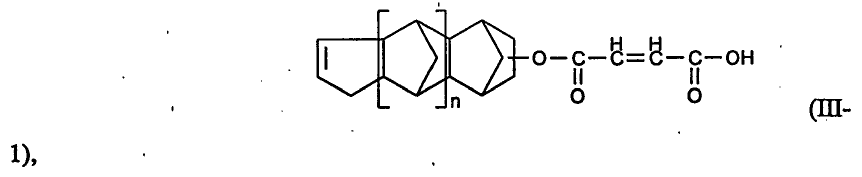 worin der Index n die vorstehend angegebene Bedeutung hat. Vorzugsweise wird diese Verbindung in die Polyester-Vorstufen der niedermolekularen und oligomeren Urethane (A) eingeführt.

Endomethylentetrahydrophthalsäurestrukturen (IV) können durch Umsetzung von in den Polyester-Vorstufen der niedermolekularen und oligomeren Urethane (A) vorhandenen Maleinsäureanhydridstrukturen mit Cyclopentadien eingeführt werden.

Methodisch gesehen weisen die Verfahren keine Besonderheiten auf, sondern erfolgen nach den üblichen und bekannten Methoden der organischen Isocyanatchemie. Vorzugsweise werden die Umsetzungen unter Inertgas durchgeführt, wobei Temperaturen von 20 bis 150, vorzugsweise 30 bis 145, bevorzugt 40 bis 140 und insbesondere 50 bis 135°C angewandt werden. Die Umsetzungen können in einem organischen Lösemittel oder Losemittelgemisch durchgeführt werden, das nicht isocyanatreaktiv ist. Beispiele für geeignete organische Lösemittel sind Ketone oder Ester wie Methylethylketon, Methylisobutylketon oder Ethoxyethylpropionat. Es ist außerdem möglich, die Umsetzung in Substanz in der Schmelze durchzuführen.Des weiteren ist es von Vorteil, übliche und bekannte Katalysatoren wie Dibutylzinndilaurat, Lithiumdecanoat oder Zinkoctoat in wirksamen Mengen zu verwenden. Das resultierende niedermolekulare und oligomere Urethan (A) kann durch Eindampfen der Lösung und/oder durch Aus- und/oder Umkristallisieren isoliert und gereinigt werden. Die Umsetzungen in der Schmelze weisen den Vorteil auf, daß das niedermolekulare und oligomere Urethan (A) lösemittelfrei anfällt.

Der erfindungsgemäße Blend enthält mindestens eine im üblichen und bekannten Sinne amorphe Verbindung (B), wobei die Verbindung (B) herstellbar ist, indem man
- mindestens ein lineares Diisocyanat mit
- mindestens einer Verbindung mit mindestens zwei isocyanatreaktiven Gruppen und
- mindestens einer Verbindung mit mindestens einer isocyanatreaktiven Gruppe und mindestens einer reaktiven funktionellen Gruppe mit mindestens einer mit aktinischer Strahlung aktivierbaren Bindung
umsetzt; die Verbindung (B) niedermolekular und/oder oligomer ist; die funktionellen Gruppen mit mindestens einer mit aktinischer Strahlung aktivierbaren Bindung über Urethangruppen an die Grundstruktur der Verbindung (B) gebunden sind; und die mit aktinischer Strahlung aktivierbaren Bindungen in reaktiven funktionellen Gruppen, ausgewählt aus der Gruppe bestehend aus (Meth)acrylat-, Ethacrylat-, Crotonat-, Cinnamat-, Vinylether-, Vinylester-, Dicyclopentadienyl-, Norbornenyl-, Isoprenyl-, Isopropenyl-, Allyl-, Butenyl-, Butenylether- und Butenylestergruppen, enthalten sind.

Die Verbindung (B) enthält im statistischen Mittel mindestens eine, vorzugsweise mindestens zwei, insbesondere zwei, strahlungsaktivierbare Gruppen im Molekül.Die in einer gegebenen Verbindung (B) vorhandenen strahlungsakivierbaren Gruppen können gleich oder voneinander verschieden sein.Vorzugsweise werden strahlungsaktivierbare Gruppen der gleichen Art verwendet.

Was die endständigen und/oder lateralen strahlungsaktivierbaren Gruppen, die chemisch gebundenen Photoinitiatoren und Photocoinitiatoren, die chemisch gebundenen stabilisierenden Verbindungen, die Gruppen der Formeln III und IV, die reaktiven funktionellen Gruppen für die thermische Vernetzung, die verknüpfenden Strukturen I und II und die Ausgangsprodukte für die Herstellung der Grundstrukturen der Verbindungen (B) sowie die Herstellverfahren für die Verbindungen (B) betrifft, gilt das vorstehend bei den Verbindungen (A) Gesagte hier sinngemäβ.

Im Unterschied zu den Verbindungen (A) sind aber die Verbindungen (B) vorzugsweise nicht linear aufgebaut. Dabei können die Verbindungen (B) verzweigt oder nicht verzweigt sein. Vorzugsweise sind die Verbindungen (B) nicht oder nur wenig verzweigt, um zu hohe Schmelzeviskositäten zu vermeiden.

Die Nichtlinearität der Verbindungen (B), insbesondere der niedermolekularen und oligomeren Urethane (B), wird erzielt durch die Verwendung mindestens eines nicht linearen und/oder eines polyfunktionellen Ausgangsprodukts bei der Herstellung der Verbindungen (B). Beispiele geeigneter Ausgangsprodukte sind nicht lineare Diisocyanate und nicht lineare Diole, Diamine oder Aminoalkohole, Polyole, Polyamine, polyfunktionelle Aminoalkohole oder Polyisocyanate, welche zusätzlich zu den oder anstelle der vorstehend im Zusammenhang mit der Verbindung (A) beschriebenen Ausgangsprodukten verwendet werden können.

Beispiele für geeignete nicht lineare Diisocyanate sind Isophorondiisocyanat (= 5-Isocyanato-1-isocyanatomethyl-1,3,3 trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyyl-cyclohexan, 1-Isocyanato-2-(3-isocyanatoprop-1-yl)-cyclohexan,1-Isocyanato-2-(3-isocyanatoeth-1-yl)cyclohexan,1-Isocyanato-2-(4-isocyanatobut-1-yl)-cyclohexan, 1,2-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2- oder 1,3-Bis(2-isocyanatoeth-1-yl)cyclohexan, 1,3-Bis(3-isocyanatoprop-1-yl)cyclohexan, 1,2- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentschriften DE-A-4414 032, GB-A-1220717, DE-A-1618 795 oder DE-A-17 93 785 beschrieben wird; Toluylendiisocyanat, Xylylendiisocyanat, Bisphenylendiisocyanat oder Naphthylendiisocyanat, insbesondere aber Isophorondiisocyanat.

Beispiele geeigneter Polyisocyanate sind die Isocyanurate der vorstehend beschriebenen Diisocyanate. Weitere Beispiele geeigneter Polyisocyanate sind isocyanatgruppenhaltige Polyurethanpräpolymere, die durch Reaktion von Polyolen mit einem Überschuß an Polyisocyanaten hergestellt werden können und bevorzugt niederviskos sind. Es können auch Biuret-, Allophanat-, Iminooxadiazindion-, Urethan-, Harnstoff- Carbodiimid und/oder Uretdiongruppen aufweisende Polyisocyanate verwendet werden. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Beispiele geeigneter verzweigter Diole und Polyole sind 1,2-Propandiol, 1,2- oder 1,3-Butandiol, 1,2-, 1,3- oder 1,4-Pentandiol, 1,2-, 1,3-, 1,4- oder 1,5-Hexandiol,, Neopentylglykol, 1,2- oder 1,3-Cyclohexandiol, 1,2- oder 1,3-Cyclohexandimethanol, die stellungsisomeren Diethyloctandiole, 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bieyclo[2.2.1]heptan, 2,2-Diethylpro-pandiol-1,3, 2,2-Dipropylpropandiol-1,3, 2-Cyclo-hexyl-2-methylpropandiol-1,3, 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3 oder 1,3-(2'-Hydroxypropyl)-benzol.

Beispiele geeigneter Triole sind Trimethylolethan, Trimethylolpropan oder Glycerin, insbesondere Trimethylolpropan.

Beispiele geeigneter Tetrole sind Pentaerythrit oder Homopentaerythrit.

Beispiele geeigneter höher funktioneller Polyole sind Zuckeralkohole wie Threit, Erythrit, Arabit, Adonit, Xylit, Sorbit, Mannit oder Dulcit.

Beispiele geeigneter nicht linearer und/oder polyfuktioneller Amine und Aminoalkohole sind Isophorondiamin, 4,2'-Diaminodicyclohexylmethan, 1-Amino-3-aminomethyl-3,5,5-trimethyl-cyclohexan, Diethylentriamin, Triethylentetramin, Dipropylendiamin, Dibutylentriamin, Diethanolamin oder Triethanolamin.

Diese Ausgangsprodukte können auch solche für die Herstellung der niedermolekularen und oligomeren Urethane (B) oder ihrer Vorstufen, den Polyestern, eingesetzt werden.

Für die Herstellung der Polyester als Vorstufen für die niedermolekularen und oligomeren Urethane (B) können als nicht lineare und/oder poylfunktionelle Carbonsäuren Phthalsäure, Isophthalsäure,Phthalsäure- oder Isophthalsäuremonosulfat, Halogenphthalsäuren, wie Tetrachlor- bzw. Tetrabromphthalsäure, Itaconsäure 1,2-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 4-Methylhexahydrophthalsäure, Tricyclodecandicarbonsäure, Tetrahydrophthalsäure, Endomethylentetrahydrophthalsäure, 4-Methyltetrahydrophthalsäure, Trimellithsäure, sym-Benzoltricarbonsäure, 1,2,4-Cyclohexantricarbonsäure, 1,2,4,5-Cyclohexantetracarbonsäure oder polymere Fettsäuren, insbesondere solche mit einem Dimerengehalt von mehr als 90 Gew.-%, die auch als Dimerfettsäuren bezeichnet werden, wie deren Ester und Anhydride (sofern existent) verwendet werden.

Der erfindungsgemäße Blend enthält mindestens eine der vorstehend beschriebenen Verbindungen (A) und mindestens eine der vorstehend beschriebenen Verbindungen (B) oder er besteht aus diesen. Demnach kann der erfindungsgemäße Blend bis zu 100 Gew.-% der Verbindungen (A) und (B) enthalten. Vorzugsweise enthält der erfindungsgemäße Blend mindestens 50, bevorzugt mindestens 60, besonders bevorzugt mindestens 70, ganz besonders bevorzugt mindestens 80 und insbesondere mindestens 90 Gew.-% der Verbindungen (A) und (B).

Vorzugsweise weist das Phasendiagrammen des erfindungsgemäßen Blends im Bereich des festen Zustands, d. h. unterhalb der Schmerztemperaturen der Verbindungen (A) und (B), eine Mischungslücke auf. Dies bedeutet, daß die Verbindungen (A) und (B) im festen Zustand nicht miteinander mischbar sind, sondern feinteilige Domänen bilden, die entweder alleine oder überwiegend die Verbindungen (A) oder alleine oder überwiegend die Verbindungen (B) enthalten.

Vorzugsweise sind aber die Verbindungen (A) und (B) im geschmolzenen Zustand miteinander, bevorzugt in jedem Verhältnis, mischbar.

Das Gewichtsverhältnis von Verbindungen (A) zu Verbindungen (B) kann in den erfindungsgemäße Blend sehr breit variieren. Es richtet sich insbesondere danach, welche Mengen von Verbindungen (A) und (B) jeweils benötigt werden, um einen möglichst niedrigen Schmelzpunkt, eine möglichst niedrige Schmelzeviskosität, eine hohle Blockfestigkeit und eine gute Mahlbarkeit zu gewährleisten. Vorzugsweise liegt das Verhältnis (A) : (B) bei 1 : 10 bis 5 : 1, bevorzugt 1 : 9 bis 4 : 1, besonders bevorzugt 1 : 8 bis 3 : 1, ganz besonders bevorzugt 1 : 7 bis 2 : 1 und insbesondere 1 : 6 bis 1 : 1.

Vorzugsweise weist der erfindungsgemäße Blend einen Schmelzpunkt oder einen sehr engen Schmelzbereich von 40 bis 130, bevorzugt 45 bis 110, besonders bevorzugt 50 bis 100, ganz besonders bevorzugt 55 bis 90 und insbesondere 60 bis 80°C auf. Der Schmelzbereich erstreckt sich vorzugsweise über maximal 30, bevozugt 25, besonders bevorzugt 20, ganz besonders bevorzugt 15 und insbesondere 10°C.

Vorzugsweise hat der erfindungsgemäße Blend bei 140°C eine Schmelzeviskosität von 500 bis 8.000, bevorzugt 1.000 bis 6.000, ganz besonders bevorzugt 1.100 bis 5.000 und insbesondere 1.200 bis 4.000 mPas.

Die Herstellung des erfindungsgemäße Blends kann nach allen üblichen und bekannten Methoden der Herstellung von Kunststoffmischungen erfolgen. Beispielsweise können die Verbindungen (A) und (B) jede für sich getrennt hergestellt werden, wonach man sie als Schmelzen in üblichen und bekannten Mischaggregaten, wie statische Mischer, Extruder oder Kneter, zu den erfindungsgemäßen Blends formt. Die Verbindungen (A) und (B) können aber auch in Lösung miteinander vermischt werden, wonach man die Lösemittel abdestilliert.

Vorzugsweise werden die erfindungsgemäßen Blend nach dem mehrstufigen erfindungsgemäßen Verfahren hergestellt. Das erfindungsgemäße Verfahren kann in mehreren Varianten durchgeführt werden. Wesentlich ist, daß zunächst mindestens eine Verbindung (A) oder (B) hergestellt wird, wonach man mindestens eine Verbindung (B) oder (A) in der oder den Verbindungen (A) oder (B) herstellt.

In einer ersten bevorzugten Variante des erfindungsgemäßen Verfahrens wird in mindestens einer ersten Stufe mindestens eine Verbindung (B) hergestellt, wonach man in mindestens einer zweiten Stufe mindestens eine Verbindung (A) in der Verbindung (B) oder in den Verbindungen (B) als Reaktionsmedium herstellt.

In einer zweiten bevorzugten Variante wird in mindestens einer ersten Stufe mindestens eine Verbindung (A) hergestellt, wonach man in mindestens einer zweiten Stufe mindestens eine Verbindung (B) in der Verbindung (A) oder den Verbindungen (A) als Reaktionsmedium herstellt.

Bei den beiden bevorzugten Varianten kann des weiteren in mindestens einer weiteren Stufe mindestens eine Verbindung (A) und/oder mindestens eine Verbindung (B) in den Produktgemischen der vorangegangenen Stufen herstellt werden.

Das erfindungsgemäße Verfahren bietet zahlreiche unterschiedliche Möglichkeiten der Herstellung der erfindungsgemäße Blends. Dadurch kann es speziellen Erfordernissen sehr gut angepaßt werden, wodurch sich zahlreiche neuartige Möglichkeiten zur Steuerung des Verfahrens und des Eigenschaftprofils der erfindungsgemäßen Blends ergeben. Ein weiterer wesentlicher Vorteil des erfindungsgemäßen Verfahrens ist, daß es in Abwesenheit von Lösemitteln in der Schmelze durchgeführt werden kann. Die resultierenden Schmelzen liefern nach dem Erstarren direkt die erfindungsgemäßen Blends. Noch ein weiterer wesentlicher Vorteil des erfindungsgemäßen Verfahrens ist, daß den Schmelzen Zusatzstoffe zugesetzt werden können, wie sie üblicherweise in Beschichtungsstoffen, Klebstoffen und Dichtungsmassen verwendet werden. Wegen der niedrigen Viskosität der Schmelzen können die Zusatzstoffe besonders gut dispergiert werden.

Die erfindungsgemäßen Blends sind hervorragend zur Herstellung mit aktinischer Strahlung oder mit aktinischer Strahlung und thermisch härtbarer Beschichtungsstoffe, Klebsstoffe oder Dichtungsmassen geeignet. Hierzu werden sie durch physikalische Bearbeitung wie Mahlen, ggf. gefolgt von Sichten oder Sieben, und/oder durch Zugabe geeigneter Zusatzstoffe in die für den jeweiligen Verwendungszweck geeignete Form überführt.

Die hierbei resultierenden erfindungsgemäßen Beschichtungsstoffe, Klebstoffe oder Dichtungsmassen sind vorzugsweise Pulver oder Granulate oder in Wasser und/oder in organischen Lösemitteln dispergierte Pulver (Pulverslurries). Bevorzugt sind die Klebstoffe und Dichtungsmassen Pulver, Granulate oder in Wasser und/oder in organischen Lösemitteln dispergierte Pulver und die Beschichtungsstoffe Pulver oder in Wasser und/oder in organischen Lösemitteln dispergierte Pulver.

In dieser Form sind die erfindungsgemäßen Beschichtungsstoffe, Klebstoffe und Dichtungsmassen hervorragend zum Lackieren, Verkleben oder Abdichten von grundierten und ungrundierten Substraten jeder Art, insbeondere aber von
- Kraftfahrzeugen, inclusive Nutzfahrzeugen und PKW, und Teilen hiervon,
- Bauwerken im Innen- und Außenbereich,
- Möbeln, Türen und Fenstern,
- Gegenständen des privaten oder industriellen Gebrauchs, inclusive Coils, Container und elektrotechnische Bauteile,
geeignet.

Ganz besonders bevorzugt wird der erfindungsgemäße Blend als Pulverlack verwendet. Die Korngrößenverteilung der erfindungsgemäßen Pulverlacke kann breit variieren und richtet sich nach ihrem jeweiligen Verwendungszweck.Vorzugsweise liegt die mittlere Teilchengröße bei 1 bis 200 µm, bevorzugt 2 bis 150 µm, und besonders bevorzugt bei 3 bis 100 µm. Unter mittlerer Teilchengröße wird der nach der Laserbeugungsmethode ermittelte 50%-Medianwert verstanden, d.h., 50% der Teilchen haben einen Teilchendurchmesser ≤ dem Medianwert und 50% der Teilchen einen Teilchendurchmesser ≥ dem Medianwert.

Beispiele geeigneter pulverlacktypischer Zusatzstoffe sind Vernetzungsmittel, die die vorstehend beschriebenen komplementären reaktiven funktionellen Gruppen enthalten, farb- und/oder effektgebende, fluoreszierende, elektrisch leitfähige und/oder magnetisch abschirmende Pigmente, Metallpulver, lösliche organische Farbstoffe, organische und anorganische, transparente oder opake Füllstoffe, UV-Absorber, Lichtschutzmittel, Radikalfänger, Entlüftungsmittel, Slipadditive, Polymerisationsinhibitoren, Katalysatoren für die Vernetzung, thermolabile radikalische Initiatoren, Photoinitiatoren und -coinitiatoren, thermisch härtbare Reaktiverdünner, mit aktinischer Strahlung härtbare Reaktivverdünner, Haftvermittler, Verlaufmittel, filmbildende Hilfsmittel, Flammschutzmittel, Korrosionsinhibitoren, Rieselhilfen, Wachse und/oder Mattierungsmittel. Die Bestandteile können einzeln oder als Gemische angewandt werden. Beispiele geeigneter Zusatzstoffe werden in dem Lehrbuch »Lackadditive« von Johan Bieleman, Wiley-VCH, Weinheim, New York, 1998, im Detail beschrieben.

Von besonderer Bedeutung sind die farb- und/oder effektgebenden, fluoreszierenden, elektrisch leitfähigen und/oder magnetisch abschirmenden Pigmente und die Füllstoffe.

Beispiele geeigneter Effektpigmente sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz-bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36156 A1, DE 3718446 A1, DE 3719804 A1, DE 3930601 A1, EP0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruβ, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinäphthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453, »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid der Magnesiumhydroxid oder organische Füllstoffe wie Kunststoffpulver, insbesondere aus Poylamid oder Polyacrlynitril. Ergänzend wird auf Römpp Lexikon Lacke und Druckfarben, Georg Thieme Verlag, 1998, Seiten 250 ff., »Füllstoffe«, verwiesen.

Vorzugsweise werden Glimmer und Talkum angewandt, wenn die Kratzfestigkeit der aus den erfindungsgemäßen Pulverlacken hergestellten Beschichtungen verbessert werden soll.

Außerdem ist es von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden können.

Beispiele geeigneter transparenter Füllstoffe sind solche auf der Basis von Siliziumdioxid, Aluminiumoxid oder Zirkoniumoxid, insbesondere aber Nanopartikel auf dieser Basis.

Vorzugsweise werden die vorstehend beschriebenen Zusatzstoffe den Schmelzen der erfindungsgemäßen Blends zugesetzt, sofern sie sich in dem angewandten Temperaturbereich nicht zersetzen oder unerwünschte Reaktionen mit den übrigen Bestandteilen der erfindungsgemäßen Pulverlacke eingehen.

Die Applikation des erfindungsgemäßen Pulverlack weist keine methodischen Besonderheiten auf, sondern erfolgt mit Hilfe üblicher und bekannter Verfahren und Vorrichtungen beispielsweise durch elektrostatisches Versprühen, wobei auch hier Bedingungen angewandt werden, unter denen keine vorzeitige thermische Vernetzung und/oder Vernetzung mit aktinischer Strahlung und/oder sonstigen Schädigungen einzelner Bestandteile des erfindungsgemäßen Pulverlacks beispielsweise durch thermischen Abbau eintreten (vgl. auch die Firmenschriften von BASF Coatings AG, »Pulverlacke, für industrielle Anwendungen«, Januar 2000, oder »Coatings Partner, Pulverlack Spezial«, 1/2000).

Der erfindungsgemäße Pulverlack kann in den unterschiedlichsten Schichtdicken appliziert werden, so daß Beschichtungen der unterschiedlichsten Stärke, insbesondere von 10 bis 250 µm, resultieren. Die Stärke der Beschichtungen richtet sich nach ihrem Verwendungszweck und kann daher vom Fachmann ohne weiteres eingestellt werden.

Auch die Härtung der applizierten Pulverlackschichten weist keine methodischen Besonderheiten auf, sondern es werden die üblichen und bekannten Verfahrens und Vorrichtungen angewandt.

So kann das Aufschmelzen der Pulverlackschichten, nach den üblichen und bekannten Methoden wie Erhitzen in einem Umluftofen oder Bestrahlen mit IR-Lampen druchgeführt werden.

Die Härtung mit aktinischer Strahlung kann mit elektromagnetischer Strahlung wie Röntgenstrahlung, UV-Strahlung, sichtbares Licht oder nahes IR-Licht (NBR), insbesondere UV-Strahlung, oder mit Korpuskularstrahlung wie Elektronenstrahlen durchgeführt werden. Verfahren und Vorrichtungen für die Härtung mit aktinischer Strahlung sind üblich und bekannt und werden beispielsweise in R. Holmes, »U.V. and E.B. Curing Formulations for Printing Inks«, Coatings and Paints, SITA Technology, Academic Press, London, United Kindom 1984, beschrieben.

Die thermische Härtung weist ebenfalls keine methodischen Besonderheiten auf, sondern erfolgt nach den üblichen und bekannten Methoden wie Erhitzen in einem Umluftofen oder Bestrahlen mit IR-Lampen.

Als Substrate kommen alle zu lackierenden Oberflächen von Gegenständen in Betracht, die einer Härtung der hierauf befindlichen Lackschichten unter Anwendung von Hitze und aktinischer Strahlung zugänglich sind, das sind z. B. Gegenstände aus Metallen, Kunststoffen, Holz, Keramik, Stein, Textil, Faserverbunden, Leder, Glas, Glasfasern, Glas- und Steinwolle oder mineral- und harzgebundene Baustoffen, wie Gips- und Zementplatten oder Dachziegel.
Die hierbei angewandten metallischen Substrate können eine Grundierung, insbesondere eine kathodisch oder anodische abgeschiedene und thermisch gehärtete Elektrotauchlackierung aufweisen. Gegebenenfalls kann die Elektrotauchlackierung noch mit einer Steinschlagschutzgrundierung oder einem Füller beschichtet sein.

Die resultierenden Beschichtungen haben hervorragende mechanische Eigenschaften, einen hervorragenden Verlauf und haften sehr gut auf metallischen Substraten.

Die vorstehenden Ausführungen gelten sinngemäß auch für die aus den erfindungsgemäßen Pulverlacken hergestellten Pulverslurries. Gerade wegen der sehr guten Mahlbarkeit der Pulverlacke werden besonders vorteilhafte Pulverslurries erhalten.

Besondere Vorteile resultieren, wenn die erfindungsgemäßen Klebschichten, Dichtungen und Beschichtungen mit Hilfe des erfindungsgemäßen Applikations- und Härtungsverfahrens hergestellt werden.

Zu diesem Zweck wird
(1) mindestens ein erfindungsgemäßer Beschichtungsstoff und/oder Klebstoff und/oder mindestens eine erfindungsgemäße Dichtungsmasse in der Form
   (1.1) einer Schmelze,
   (1.2) eines Pulvers oder
   (1.3) einer Pulverslurry
   auf das vorstehend beschriebene grundierte oder ungrundierte Substrat appliziert,
(2) die resultierende Pulverslurry-Schicht (1.3) getrocknet oder die resultierende Schicht der Schmelze (1.1) erstarren gelassen oder durch Erhitzen weiterhin in geschmolzenem Zustand gehalten,
(3) die resultierende feste Schicht (1.2) oder (1.3) durch Erhitzen aufgeschmolzen und
(4) die im Verfahrenschritt (2) oder (3) resultierende geschmolzene Schicht
   (4.1) im geschmolzenen Zustand,
   (4.2) beim Erstarren und/oder
   (4.3) nach dem Erstarren
   mit aktinischer Strahlung gehärtet.

Zusätzlich zur Härtung mit aktinischer Strahlung kann bei entsprechender Zusammensetzung der Beschichtungsstoffe, Dichtungsmassen und Klebstoffe noch die thermische Härtung vor, während oder nach dem Verfahrensschritt (4) durchgeführt werden.

Die aus dem erfindungsgemäßen Klebstoffen und Dichtungsmassen hergestellten Klebschichten und Dichtungen haben auch unter extremen klimatischen Bedingungen eine hervorragende Klebkraft und Dichtungsfähigkeit auch über lange Zeiträume hinweg.

Die erfindungsgemäßen Beschichtungen weisen außer den vorstehend beschriebenen Vorteilen auch noch eine besonders hohe Witterungsstabilität und Vergilbungsbeständigkeit auf.

### Beispiele und Vergleichsversuche

### Herstellbeispiell

### Die Herstellung eines Addukts von Dicyclopentadien und Maleinsäureanhydrid

In einem Rührkolben mit Heizung und Rückflußkühler wurden 661,10 g Dicyclopentadien (5,0 Mol) und 490,30 g Maleinsäureanhydrid (5,0 Mol) eingewogen. Die Reaktionsmischung wurde unter einem leichten Stickstoffstrom auf 125°C erhitzt, wonach über einen Tropftrichter während einer Stunde 95,00 g Wasser (5,0 Mol + 5 g) zugegeben wurden. Es wurde bei 125°C noch eine Stunde nachreagieren gelassen. Es resultierte die Monocarbonsäure

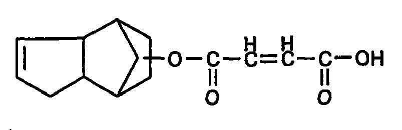

### Herstellbeispiel 2

### Die Herstellung eines hydrozylgruppenterminierten ungesättigten Polyesters

220,5 g Maleinsäureanhydrid (2,25 mol), 64,6 g der Monocarbonsäure des Herstellbeispiels 1 (0,25 mol), 279 g Ethylenglykol (4,5 mol), 5,65 g 50%iger hypophosphoriger Säure und 0,05 g Hydrochinon wurden in einem Reaktionsgefäß mit aufgesetzter Destillationsbrücke eingewogen und unter Rühren langsam auf 150°C aufgeheizt, wobei das gebildete Reaktionswasser abdestilliert wurde. Anschließend wurde während zwei Stunden bei 150°C, während einer Stunde bei 170°C, während zwei Stunden bei 180°C und während fünf Stunden bei 190°C kondensiert. Der resultierende Polyester wies eine Säurezahl von 3 mg KOH/g und ein Hydroxyläquivalentgewicht von 259,55 g auf

### Vergleichsversuch V 1

### Die Herstellung des kristallinen Oligourethans V 1

Es wurde ein kristallines Oligourethan mit dem Aufbauschema:

HEA-HDI-G-HDI-HEA

hergestellt. Dazu wurden 93 g Ethylenglykol (G) (1,5 mol), 348 g Hydroxyethylacrylat (HEA) (3 mol) und 0,48 g 2,2,6,6-Tetramethyl-4-hydroxypiperidin-N-oxid in einem Reaktionsgefäß unter Stickstoff vorgelegt und auf 60°C erhitzt. Zu dieser Vorlage wurden während einer Stunde 504 g Hexamethylendiisocyanat (HDI) (3 mol) und 0,96 g Dibutylzinndilaurat zudosiert. Nach der anfänglichen exothermen Reaktion wurde das Reaktionsgemisch bei 130 bis 140°C gehalten. Nach dem Ende des Zulaufs wurde noch während 10 Minuten bei 150°C nachreagieren gelassen. Die resultierende Schmelze war klar. Sie wurde auf Aluminiumfolie ausgegossen und erstarrte beim Abkühlen.

Das Oligourethan V1 war bei Raumtemperatur trübe und von wachsartiger, leicht schmieriger Konsistenz. Es war in üblichen Pulverlackmühlen nicht mahlbar und in zahlreichen lacküblichen organischen Lösemitteln unlöslich. Sein Schmelzpunkt lag bei 125°C, die Schmelzeviskosität bei 800 mPas bei 150°C. Allerdings war diese Schmelzeviskosität zu niedrig für die Verarbeitung in einem Pulverlackextruder.

### Vergleichsversuch V 2

### Die Herstellung des kristallinen Oligourethans V 2

Es wurde ein kristallines Oligourethan mit dem Aufbauschema:

HEA-HDI-HX-HDI-HX-HDI-HEA

hergestellt. Zu diesem Zweck wurden 354 g Hexandiol-1,6 (HX) (2 mol), 232 g Hydroxyethylacrylat (HEA) (2 mol) und 0,5 g 2,2,6,6-Tetramethyl-4-hydroxypiperidin-N-oxid in einem Reaktionsgefäß unter Stickstoff vorgelegt und auf 60°C erhitzt. Zu dieser Vorlage wurden während einer Stunde 504 g Hexamethylendiisocyanat (HDI) (3 mol) und 1,0 g Dibutylzinndilaurat zudosiert. Nach der anfänglichen exothermen Reaktion wurde das Reaktionsgemisch bei 130 bis 140°C gehalten. Nach dem Ende des Zulaufs wurde noch während 10 Minuten bei 150°C nachreagieren gelassen. Die resultierende Schmelze war klar. Sie wurde auf Aluminiumfolie ausgegossen und erstarrte beim Abkühlen.

Das Oligourethan V 2 war bei Raumtemperatur trübe und von wachsartiger, leicht schmieriger Konsistenz. Es war in üblichen Pulverlackmühlen nicht mahlbar und in zahlreichen lacküblichen organischen Lösemitteln unlöslich. Sein Schmelzpunkt lag bei 140°C, die Schmelzeviskosität bei 2.850 mPas bei 150°C.

Der Schmelzpunkt war für die meisten Pulverlackanwendungen zu hoch. Bei der Verarbeitung im Pulverlackextruder kann es zur Bildung von Gelteilchen.

### Vergleichversuch V 3

### Die Herstellung des kristallinen Oligourethans V 3

Es wurde ein Oligourethan des Aufbauschemas:

HEA-HDI-HX-HDI-HX-HDI-HX-HDI-HEA

hergestellt.

Zu diesem Zweck wurden wurden 531 g Hexandiol-1,6 (HX) (3 mol), 232 g Hydroxyethylacrylat (HEA) (2 mol) und 0,8 g 2,2,6,6-Tetramethyl-4-hydroxypiperidin-N-oxid in einem Reaktionsgefäß unter Stickstoff vorgelegt und auf 60°C erhitzt. Zu dieser Vorlage wurden während einer Stunde 1.008 g Hexamethylendüsocyanat (HDI) (4 mol) und 1,5g Dibutylzinndilaurat zudosiert. Nach der anfänglichen exothermen Reaktion wurde das Reaktionsgemisch bei 160 bis 165 °C gehalten. Nach dem Ende des Zulaufs wurde noch während 10 Minuten bei 165 °C nachreagieren gelassen. Die resultierende Schmelze war klar. Sie wurde auf Aluminiumfolie ausgegossen und erstarrte beim Abkühlen.

Das resultierende Oligourethan V 3 war eine trübe, harzartige Substanz von wachsartiger, leicht schmieriger Konsistenz. Es war in üblichen Pulverlackmühlen nicht mahlbar und in zahlreichen lacküblichen organischen Lösemitteln unlöslich. Sein Schmelzpunkt lag bei 155°C, die Schmelzeviskosität bei 5.400 mPas bei 160°C. Die Schmelze war allerdings nicht stabil, sondern begann bei dieser Temperatur zu vernetzen.

### Vergleichsversuche V 4

### Die Herstellung des amorphen Oligourethans V 4

Es wurde ein Oligourethan des Aufbauschemas:

HEA-IPDI-G-1.PDI-G-IPDI-HEA

hergestellt.

Zu diesem Zweck wurden 124 g Ethylenglykol (G) (2 mol), 232 g Hydroxyethylacrylat (HEA) (2 mol) und 0,8 g 2,2,6,6-Tetramethyl-4-hydroxypiperidin-N-oxid unter Stickstoff vorgelegt und auf 60°C erhitzt Zu dieser Vorlage wurden während einer Stunde 666 g Isophorondiisocyanat (IPDI) (3 mol) und 1,0 g Dibutylzinndilaurat zudosiert. Nach der anfänglichen exothermen Reaktion wurde das Reaktionsgemisch bei 100 bis 120°C gehalten. Nach dem Ende des Zulaufs wurde noch während 30 Minuten bei 125 °C nachreagieren gelassen. Die resultierende Schmelze war klar. Sie wurde auf Aluminiumfolie ausgegossen und erstarrte beim Abkühlen.

Das resultierende Oligourethan V 4 war bei Raumtemperatur ein klares, hartes Harz. Es war blockfest und bei Raumtemperatur mit üblichen Pulverlackmühlen gut mahlbar und in den lacküblichen organischen Lösemittel löslich. Sein Schmelzpunkt lag bei 75°C, seine Schmelzeviskosität bei 7.600 mPas bei 140°C. Die Schmelzeviskosität war für die praktische Anwendung gerade noch akzeptabel.

### Beispiel 1

### Die Herstellung des erfindungsgemäße Blends 1

Es wurde ein erfindungsgemäßer Blend des Aufbauschemas:

| | | |
|---|---|---|
| Etwa 60 Gew.-% | HEA-IPDI-G-IDPI-G-IPDI-HEA | 1. amorphe Stufe |
| Etwa 20 Gew.-% | HEA-IPDI-G-IPDI-DCHP-IPDI-HEA | 2. amorphe Stufe |
| Etwa 20 Gew.-% | HEA-HDI-HX-HDI-HEA | kristalline Stufe |

hergestellt.

Zu diesem Zweck wurden 82,66 g Ethylenglykol (G) (1,333 mol), 154,66 g Hydroxyethylacrylat (HEA) (1,333 mol) und 0,33 g 2,2,6,6-Tetramethyl-4-hydroxy-piperidin-N-oxid unter Stickstoff vorgelegt und auf 60°C erhitzt. Dazu wurden während 30 Minuten 444 g Isophorondiisocyanat (IPDI) (2 mol) und 0,66 g Dibutylzinndilaurat zudosiert. Nach der anfänglichen exothermen Reaktion wurde die Reaktionsmischung zwischen bei 90 bis 120°C gehalten. Nach dem Ende des Zulaufs wurde noch während 10 Minuten bei 125°C nachreagieren gelassen.

Zu dem in der ersten Stufe gebildeten Reaktionsgemisch wurden 11,74 g Ethylenglykol (0,189 mol), 43,9 g Hydroxyethylacrylat (0,378 mol), 45,4 g Dicyclohexanolpropan (DCHP) (0,189 mol) und 0,2 g 2,2,6,6-Tetramethyl-4-hydmxy-piperidin-N-oxid zudosiert. Nach der Zugabe wurde wieder auf 125°C erhitzt, wonach 126 g Isophorondiisocyanat (0,568 mol) und 0,4 g Dibutylzinndilaurat während 15 Minuten bei 120 bis 130°C zudosiert wurden. Das resultierende Reaktionsgemisch wurden während 10 Minuten bei 125°C gerührt.

Zu diesem in der zweiten Stufe gebildeten Reaktionsgemisch wurden bei 125°C. 42,48 g Hexandiol-1,6 (0,36 mol), 83,6 g Hydroxyethylacrylat (0,721 mol) und 0,2 g 2,2,6,6-Tetramethyl-4-hydroxy-piperidin-N-oxid hinzugegeben. Anschließend wurden während 15 Minuten bei 125°C 121,1 g Hexamethylendiisocyanat (HDI) (0,721 mol) und 0,4 g Dibutylzinndilaurat zudosiert. Das resultierende Reaktionsgemisch wurde noch während 10 Minuten bei 125°C nachreagieren gelassen. Die Schmelze war klar. Sie wurde auf Aluminiumfolie ausgegossen und erstarrte beim Abkühlen.

Der resultierende erfindungsgemäße Blend 1 war ein trübes, hartes Harz. Er konnte bei Raumtemperatur mit üblichen Pulverlackmühlen gut gemahlen werden und war in die lacküblichen organischen Lösemitteln als trübe Dispersion löslich. Sein Schmelzpunkt lag bei etwa 70°C, seine Schmelzeviskosität bei 2.700 mPas bei 140°C. Die Schmelzeviskosität war optimal. Der Blend 1 war hervorragend zur Herstellung von Pulverlacken geeignet.

### Beispiel 2

### Die Herstellung des erfindungsgemäßen Blends 2

Es wurde ein erfindungsgemäßer Blend des Aufbauschemas:

| | | |
|---|---|---|
| 70 Gew.-% | HEA-IPDI-[-(0,8 G / 0,2 HOE)-]-IPDI-[-(0,8 G / 0,2 HOE)-]-IPDI-HEA | amorphe Stufe |
| 20 Gew.-% | HEA-HDI-G-HDI-G-HDI-G-HDI-HEA | 1. kristalline Stufe |
| 10 Gew.-% | HEA-HDI-HX-HDI-HX-HDI-HEA | 2. kristalline Stufe |

hergestellt.

Zu diesem Zweck wurden 74,4 g Ethylenglykol (in), 174 g Hydroxyethylacrylat (HEA), 155,7 g des Polyesters des Herstellbeispiels 2 (HOE), 0,45 g 2,2,6,6-Tetramethyl-4-hydroxy-piperidin-N-oxid, 0,45 g Hydrochinonmonomethylether und 0,22 g tert.-Butylkresol unter Stickstoff vorgelegt und auf 60°C erhitzt. Anschließend wurden während 30 Minuten 499,5 g Isophorondüsocyanat (IPDI) und 0,9 g Dibutylzinndilaurat zudosiert. Während der Zugabe wurde die Temperatur der Reaktionsmischung durch Kühlen bei 80 bis 120°C gehalten. Anschließend wurde während fünf Minuten bei 120 bis 130°C nachgerührt.

In der resultierenden Reaktionsmischung der ersten Stufe wurden 44,0 g Ethylenglykol, 55 g Hydroxyethylacrylat und 0,12 g 2,2,6,6-Tetramethyl-4-hydroxy-piperidin-N-oxid bei 100°C gelöst. Zu der resultierende Mischung wurden während 15 Minuten bei 120 bis 130°C 159,1 g Hexamethylendiisocyanat (HDI) und 0,25 g Dibutylzinndilaurat zudosiert. Die resultierende Reaktionsmischung wurde noch während 15 Minuten bei 125 bis 130°C nachreagieren gelassen.

Zu der in der zweiten Stufe gebildeten Reaktionsmischung wurden bei dieser Temperatur 31,3 g Hexandiol-1,6 (HX), 30,8 g Hydroxyethylacrylat und 0,1 g 2,2,6,6-Tetramethyl-4-hydroxy-piperidin-N-oxid gelöst. Anschließend wurden 66,9 g Hexamethylendiisocyanat und 0,12 Dibutylzinndilaurat während 15 Minuten bei 125°C zudosiert. Die Reaktion zwischen wurde noch während 10 Minuten bei 125 bis 130°C nachreagieren gelassen. Die resultierende Schmelze war klar. Sie wurde auf Aluminium Folie ausgegossen und erstarrte beim Abkühlen.

Der erfindungsgemäße Blend 2 war bei Raumtemperatur ein trübes, hartes Harz. Er war bei Raumtemperatur blockfest und mit üblichen Pulverlackmühlen gut mahlbar und in lacküblichen organischen Lösemitteln als trübe Dispersion löslich. Sein Schmelzpunkt lag bei etwa 75°C, die Schmelzeviskosität bei 3.900 mPas bei 140°C. Der erfindungsgemäße Blend 2 eignete sich sehr gut für die Verarbeitung auf dem Extruder und war hervorragend zur Herstellung von Pulverlacken geeignet.

### Beispiele 3 und 4 und Vergleichsversuche V 5 bis V 8

### Die Herstellung erfindungsgemäßer Pulverlacke und Beschichtungen (Beispiele 3 und 4) sowie nicht erfindungsgemäßer Pulverlacke und Beschichtungen (Vergleichsversuche V 5 bis V 8)

Für das Beispiel 3 wurde der erfindungsgemäße Blend 1 des Beispiels 1 verwendet.

Für das Beispiel 4 wurde der erfindungsgemäße Blend 2 des Beispiels 2 verwendet.

Für den Vergleichsversuch V 5 wurde das Oligourethan V 1 des Vergleichsversuchs V 1 verwendet.

Für den Vergleichsversuch V 6 wurde das Oligourethan V 2 des Vergleichsversuchs V 2 verwendet.

Für den Vergleichsversuch V 7 wurde das Oligourethan V 3 des Vergleichsversuchs V 3 verwendet.

Für den Vergleichsversuch V 8 wurde das Oligourethan V 4 des Vergleichsversuchs V 4 verwendet.

Für die Herstellung der Pulverlacke wurden jeweils 30 g der Oligourethane V 1 bis V 4 und der erfindungsgenmen Blends 1 und 2 mit, bezogen auf den Pulverlack, 2 Gew.-% Lucirin® TPO (handelsüblicher Photoinitiator der Firma BASF Aktiengesellschaft) und 1,0 Gew.-% Benzoin (Entgasungshilfsmittels) in der Schmelze vermischt und homogenisiert. Die erstarrten Schmelzen wurden grob zerkleinert und in Kastenrakel mit 80 µm Spalthöhe eingefüllt, die auf Prüfbleche aus Stahl aufgesetzt waren. Die Prüfbleche wurden dann zusammen mit der Kastenrakel auf einen Heiztisch bei 150°C aufgesetzt. Nach etwa 15 Minuten waren die Pulverlacken flüssig, und es wurden Filme auf die Prüfbleche aufgezogen. Die resultierenden flüssigen Schichten wurden sofort bei einer Vorlaufgeschwindigkeit von 10 m/Minute unter Luftausschluß mit UV-Strahlung einer Dosis von 1.900 mJ/cm² belichtet. Die resultierenden Lackierungen waren etwa 50 µm dick. Ihre Lösemittelbeständigkeit, Härte, Haftung auf dem Substrat und Elastizität wurden geprüft. Die Ergebnisse der Tests finden sich in der Tabelle.

**Tabelle: Anwendungstechnische Eigenschaften der erfindungsgemäßen Beschichtungen der Beispiele 3 und 4 und der nicht erfindungsgemäßen Beschichtungen der Vergleichsversuche V 5 bis V 8**

| **Beispiele/Vergleichsversuche** | | **Erichsen-MEK^{d)}** **wert^{a)}** | **Gitterschnitt^{b)}** | **Pendelhärte ^{c)}** |
|---|---|---|---|---|
| 3 | | 6,5 | 1 | 184 |
| | | 50 | | |
| | | | | |
| 4 | | > 9 | 0 | 192 |
| | | 100 | | |
| | | | | |
| V5 | | > 9 | 3 | 142 |
| | | 20 | | |
| | | | | |
| V 6 | | > 9 | 3 | 154 |
| | | 20 | | |
| | | | | |
| V 7 | | >9 | 3 | 159 |
| | | 20 | | |
| | | | | |
| V 8 | | 0,5 | 5 | 187 |
| | | 20 | | |

| | | | | |
|---|---|---|---|---|
| a) Erichsen-Tiefung gemäß DIN EN ISO 1520: 1995-04; b) Gitterschnittprüfung nach DIN ISO 2409:1994-10; c) Pendeldämpfungsprüfung nach DIN 53157: 1987-01; d) Doppelhübe mit einem mit Methylethylketon getränkten Wattebausch, bis Schädigung des Lacks eintrat. | | | | |

Die Beschichtung V 5 hatte zwar eine sehr gute Elastizität, und die Haftung war akzeptabel, die Härte war allerdings zu gering, ebenso die Lösemittelbeständigkeit.

Die Beschichtung V 6 hatte ebenfalls eine sehr gute Elastizität. Haftung und Härte waren allerdings für zahlreiche Anwendungszwecke auf einem zu niedrigen Niveau. Auch die Lösemittelbeständigkeit ließ zu wünschen übrig.

Die Beschichtung V 7 hatte eine sehr gute Elastizität, die Haftung war akzeptabel, aber die Härte und die Lösemittelbeständigkeit waren zu gering.

Die Pulverlacke der Vergleichsversuche V 5 bis V 7 waren wegen der schlechten Mahlbarkeit der betreffenden kristallinen Oligourethane V 1 bis V 3 nicht mit Hilfe der pulverlacktypischen Verfahren und Vorrichtungen herstellbar.

Die Beschichtung V 8 war spröde und von schlechter Haftung.

Die Beschichtung des Beispiels 3 wies eine gute Elastizität, Haftung und Härte auf. Die Lösemittelbeständigkeit war deutlich besser als bei den Vergleichsversuchen.

Die Beschichtung des Beispiels 4 wies eine sehr gute Lösemittelbeständigkeit, Elastizität, Haftung und Härte auf.

## Patentansprüche

1. Mit aktinischer Strahlung aktivierbarer, bei Raumtemperatur fester Blend, enthaltend
(A) mindestens eine kristalline Verbindung, enthaltend im statistischen Mittel mindestens eine reaktive funktionelle Gruppe mit mindestens einer mit aktinischer Strahlung aktivierbaren Bindung im Molekül, und
(B) mindestens eine amorphe Verbindung, enthaltend Im statistischen Mittel mindestens eine reaktive funktionelle Gruppe mit mindestens einer mit aktinischer Strahlung aktivierbaren Bindung im Molekül,
**dadurch gekennzeichnet, dass** die Verbindung (A) herstellbar ist, indem man
- mindestens ein lineares Diisocyanat mit
- mindestens einer Verbindung mit mindestens zwei isocyanatreaktiven Gruppen und
- mindestens einer Verbindung mit mindestens einer isocyanatreaktiven Gruppe und mindestens einer reaktiven funktionellen Gruppe mit mindestens einer mit aktinischer Strahlung aktivierbaren Bindung
umsetzt; die Verbindung (B) herstellbar ist, indem man
- mindestens ein nicht lineares Diisocyanat mit
- mindestens einer Verbindung mit mindestens zwei isocyanatreaktiven Gruppen und
- mindestens einer Verbindung mit mindestens einer isocyanatreaktiven Gruppe und mindestens einer reaktiven funktionellen Gruppe mit mindestens einer mit aktinischer Strahlung aktivierbaren Bindung
umsetzt; die Verbindungen (A) und (B) niedermolekular und/oder oligomer sind; die funktionellen Gruppen mit mindestens einer mit aktinischer Strahlung aktivierbaren Bindung über Urethangruppen an die Grundstrukturen der Verbindungen (A) und (B) gebunden sind; und die mit aktinischer Strahlung aktivierbaren Bindungen in reaktiven funktionellen Gruppen, ausgewählt aus der Gruppe bestehend aus (Meth)acrylat-, Ethacrylat-, Crotonat-, Cinnamat-, Vinylether-, Vinylester-, Dicyclopentadienyl-, Norbornenyl-, Isoprenyl-, Isopropenyl-, Allyl-, Butenyl-; Butenylether- und Butenylestergruppen, enthalten sind.

2. Blend nach Anspruch 1, **dadurch gekennzeichnet, dass** sein Phasendiagramm im Bereich des festen Zustands eine Mischungslücke aufweist.

3. Blend nach Anspruch 2, **dadurch gekennzeichnet, dass** die Verbindungen (A) und (B) feinteilige Domänen bilden, die entweder alleine oder überwiegend die Verbindungen (A) oder alleine oder überwiegend die Verbindungen (B) enthalten.

4. Blend nach einem der Ansprüche 1 bis 3, **dadurch gekennzeichnet, dass** die Verbindungen (A) und (B) Im geschmolzenen Zustand miteinander mischbar sind.

5. Blend nach einem der Ansprüche 1 bis 4, **dadurch gekennzeichnet, dass** die Grundstrukturen Urethangruppen enthalten.

6. Blend nach einem der Ansprüche 1 bis 5, **dadurch gekennzeichnet, dass** die Grundstrukturen der Verbindungen (A) linear sind.

7. Blend nach einem der Ansprüche 1 bis 6, **dadurch gekennzeichnet, dass** die Grundstrukturen der Verbindungen (B) nicht linear sind.

8. Blend nach einem der Ansprüche 1 bis 7, **dadurch gekennzeichnet, dass** die reaktiven funktionellen Gruppen lateral und/oder seltenständig in den Verbindungen (A) und/oder (B) vorliegen.

9. Blend nach einem der Ansprüche 1 bis 8, **dadurch gekennzeichnet, dass** die Verbindungen (A) und/oder (B) mindestens einen Stabilisator eingebaut enthalten.

10. Blend nach einem der Ansprüche 1 bis 9, **dadurch gekennzeichnet, dass** die Verbindungen (A) und/oder (B) Im statistischen Mittel mindestens eine reaktive funktionelle Gruppe im Molekül enthalten, die mit komplementären reaktiven funktionellen Gruppen oder mit Gruppen der eigenen Art thermische Vernetzungsreaktionen eingehen kann.

11. Verfahren zur Herstellung des Blends gemäß einem der Ansprüche 1 bis 10 mit Hilfe eines mehrstufigen Verfahrens, **dadurch gekennzeichnet, dass** man
(I) In einer ersten Variante in mindestens einer ersten Stufe mindestens eine Verbindung (B) herstellt, wonach man in mindestens einer zweiten Stufe mindestens eine Verbindung (A) in der Verbindung (B) oder in den Verbindungen (B) als Reaktionsmedium herstellt, oder
(II) In einer zweiten Variante in mindestens einer ersten Stufe mindestens eine Verbindung (A) herstellt, wonach man in mindestens einer zweiten Stufe mindestens eine Verbindung (B) in der Verbindung (A) oder den Verbindungen (A) als Reaktionsmedium herstellt.

12. Verfahren nach Anspruch 11, **dadurch gekennzeichnet, dass** man bei den Varianten (I) und (II) in mindestens einer weiteren Stufe mindestens eine Verbindung (A) und/oder mindestens eine Verbindung (B) in den Produktgemischen der vorangegangenen Stufen herstellt.

13. Verwendung der Blends gemäß einem der Ansprüche 1 bis 10 und/oder der gemäß Anspruch 11 oder 12 hergestellten Blends zur Herstellung mit aktinischer Strahlung oder mit aktinischer Strahlung und thermisch härtbarer Beschichtungsstoffe, Klebstoffe oder Dichtungsmassen.

14. Verwendung nach Anspruch 13, **dadurch gekennzeichnet, dass** die Beschichtungsstoffe, Klebstoffe oder Dichtungsmassen Pulver oder Granulate oder in Wasser und/oder in organischen Lösemitteln dispergierte Pulver sind.

15. Verwendung nach Anspruch 14, **dadurch gekennzeichnet, dass** die Klebstoffe und Dichtungsmassen Pulver, Granulate oder in Wasser und/oder In organischen Lösemitteln dispergierte Pulver und die Beschichtungsstoffe Pulver oder In Wasser und/oder in organischen Lösemitteln dispergierte Pulver sind.

16. Verwendung nach einem der Ansprüche 13 bis 15, **dadurch gekennzeichnet, dass** die Beschichtungsstoffe, Klebstoffe und Dichtungsmassen zum Lackieren, Verkleben oder Abdichten von
- Kraftfahrzeugen, inclusive Nutzfahrzeugen und PKW, und Teilen hiervon,
- Bauwerken im Innen- und Außenbereich,
- Möbeln, Türen und Fenstern,
- Gegenständen des privaten oder Industriellen Gebrauchs, inclusive Coils, Container und elektrotechnische Bauteile,
dienen.

## Claims

1. At room temperature, a solid mixture can be activated by means of actinic radiation that contains the following:
(A) at least one crystalline compound containing at least one reactive functional group in the statistical average with at least one compound in the molecule that can be activated by actinic radiation and
(B) at least one amorphous compound containing at least one reactive functional group in the statistical average with at least one compound in the molecule that can be activated by actinic radiation,
**characterized by**, that the compound (A) can be synthesized by reacting
- at least one linear diisocyanate with
- at least one compound with at least two isocyanate-reactive groups and
- at least one compound with at least one isocyanate-reactive group and at least one reactive functional group of a compound that can be activated with one actinic radiation
the compound (B) can be synthesized by reacting
- at least one linear diisocyanate with
- at least one compound with at least two isocyanate-reactive groups and
- at least one compound with at least one isocyanate-reactive group and at least one reactive functional group of a compound that can be activated by actinic radiation;
the compounds (A) and (B) are low-molecular and/or oligomers; the functional groups are bonded with the at least one compound that can be activated by actinic radiation by means of urethane groups to the base structures of compounds (A) and (B); and the compounds that can be activated by means of actinic radiation are contained in reactive functional groups selected from a group consisting of (meth)acrylate, ethacrylate, crotonate, cinnamate, vinylether, vinylester, dicyclopentadienyl, norbomenyl, isoprenyl, isopropenyl, allyl, butenyl, butenylether and butenylester groups.

2. Mixture according to Claim 1, **characterized by**, that its phase diagram has a miscibility gap in the range of its solid condition.

3. Mixture according to Claim 2, **characterized by**, that the compounds (A) and (B) form domains having fine parts that contain either by themselves or predominantly the compounds (A) or by themselves or predominately the compounds (B).

4. Mixture according to one of claims 1 to 3, **characterized by**, that the compounds (A) and (B) can be mixed with each other in molten condition.

5. Mixture according to one of claims 1 to 4, **characterized by**, that the basic structures contain urethane groups.

6. Mixture according to one of claims 1 to 5, **characterized by**, that the basic structures of the compounds (A) are linear.

7. Mixture according to one of claims 1 to 6, **characterized by**, that the basic structures of the compounds (B) are not linear.

8. Mixture according to one of claims 1 to 7, **characterized by**, that the reactive functional groups are present laterally and/or positioned on the sides of compounds (A) and/or (B).

9. Mixture according to one of claims 1 to 8, **characterized by**, that the compounds (A) and/or (B) contain at least one built-in stabilizer.

10. Mixture according to one of claims 1 to 9, **characterized by**, that the compounds (A) and/or (B) contain at least one reactive functional group in a statistical average in the molecule that can have thermal cross-linking reactions with complementary reactive functional groups or with groups of the same kind.

11. Method for synthesizing a mixture according to one of claims 1 to 10 using a multi-step method, **characterized by**, that
(I) in a first variant in at least a first step, at least one compound (B) is synthesized, after which in at least a second step at least one compound (A) is synthesized in compound (B) or in the compounds (B) as reaction medium, or
(II) in a second variant in at least a first step at least one compound (A) is synthesized, after which in at least a second step at least one compound (B) is synthesized in compound (A) or in the compounds (A) as reaction medium.

12. Method according to Claim 11, **characterized by**, that in variants (I) and (II) in at least an additional step at least one compound (A) and/or at least one compound (B) is produced in the product mixtures of the previous steps.

13. Use of a mixture according to claims 1 to 10 and/or the mixtures produced according to Claim 11 or Claim 12 for synthesis with actinic radiation or with actinic radiation and coating substances, adhesives or sealing masses that can be hardened thermally.

14. Use according to Claim 13, **characterized by**, that the coating substances, adhesives or sealing masses are powders or granulates or powders dispersed in water and/or in organic solvents.

15. Use according to Claim 14, **characterized by**, that the adhesives and sealing masses are powder, granulate or powders dispersed in water and/or organic solvents and the coating substances are powder or powders dispersed in water and/or in organic solvents.

16. Use according to one of claims 13 to 15, **characterized by**, that the coating substances, adhesives and sealing masses are for lacquering, gluing or sealing of
- motor vehicles, including commercial vehicles and passenger vehicles and parts thereof,
- interior and exterior construction,
- furniture, doors and windows,
- objects for private or industrial use, including coils, containers and electrical components.

## Revendications

1. Mélange solide à la température ambiante, activable par rayonnement actinique, comprenant :
(A) au moins un composé cristallin, contenant en moyenne statistique par molécule au moins un groupe fonctionnel réactif ayant au moins une liaison activable par rayonnement actinique ; et
(B) au moins un composé amorphe, contenant en moyenne statistique par molécule au moins un groupe fonctionnel réactif ayant au moins une liaison activable par rayonnement actinique,
**caractérisé par le fait que** le composé (A) est susceptible d'être obtenu par réaction
- d'au moins un diisocyanate linéaire avec
- au moins un composé ayant au moins deux groupes capables de réagir avec les groupes isocyanate, et
- au moins un composé ayant au moins un groupe capable de réagir avec les groupes isocyanate et au moins un groupe fonctionnel réactif ayant au moins une liaison activable par rayonnement actinique ;
le composé (B) est susceptible d'être obtenu par réaction
- d'au moins un diisocyanate non linéaire avec
- au moins un composé ayant au moins deux groupes capables de réagir avec les groupes isocyanate, et
- au moins un composé ayant au moins un groupe capable de réagir avec les groupes isocyanate et au moins un groupe fonctionnel réactif ayant au moins une liaison activable par rayonnement actinique ;
les composés (A) et (B) sont de faible masse moléculaire et/ou des oligomères ; les groupes fonctionnels ayant au moins une liaison activable par rayonnement actinique sont liés par l'intermédiaire de groupes uréthane aux structures de base des composés (A) et (B) ; et les liaisons activables par rayonnement actinique sont contenues dans des groupes fonctionnels réactifs choisis dans le groupe constitué par les groupes (méth)acrylate , éthacrylate, crotonate, cinnamate, vinyl éther, vinyl ester, dicyclopentadiényle, norbornényle, isoprényle, isopropényle, allyle, butényle, butényl éther et butényl ester.

2. Mélange selon la revendication 1, **caractérisé par le fait que** son diagramme de phases présente, dans la région de l'état solide, une lacune de miscibilité.

3. Mélange selon la revendication 2, **caractérisé par le fait que** les composés (A) et (B) forment des domaines à fines particules qui contiennent soit uniquement ou de manière prépondérante les composés (A), soit uniquement ou de manière prépondérante les composés (B).

4. Mélange selon l'une des revendications 1 à 3, **caractérisé par le fait que** les composés (A) et (B) sont miscibles entre eux à l'état fondu.

5. Mélange selon l'une des revendications 1 à 4, **caractérisé par le fait que** les structures de base comprennent des groupes uréthane.

6. Mélange selon l'une des revendications 1 à 5, **caractérisé par le fait que** les structures de base des composés (A) sont linéaires.

7. Mélange selon l'une des revendications 1 à 6, **caractérisé par le fait que** les structures de base des composés (B) sont non linéaires.

8. Mélange selon l'une des revendications 1 à 7, **caractérisé par le fait que** les groupes fonctionnels réactifs sont présents latéralement et/ou positionnés sur les côtés dans les composés (A) et/ou (B).

9. Mélange selon l'une des revendications 1 à 8, **caractérisé par le fait que** les composés (A) et/ou (B) contiennent au moins un stabilisant incorporé.

10. Mélange selon l'une des revendications 1 à 9, **caractérisé par le fait que** les composés (A) et/ou (B) contiennent en moyenne statistique par molécule au moins un groupe réactif qui est apte à subir des réactions de réticulation thermiques avec des groupes fonctionnels réactifs complémentaires ou avec des groupes de leur propre type.

11. Procédé de fabrication du mélange tel que défini à l'une des revendications 1 à 10, à l'aide d'un procédé à plusieurs étapes, **caractérisé par le fait que**
(I) dans une première variante, dans au moins une première étape, on prépare au moins un composé (B) puis, dans au moins une seconde étape, on prépare au moins un composé (A) dans le composé (B) ou dans les composés (B) comme milieu réactionnel, ou
(II) dans une deuxième variante, dans au moins une première étape, on prépare au moins un composé (A), puis, dans au moins une seconde étape, on prépare au moins un composé (B) dans le composé (A) ou dans les composés (A) comme milieu réactionnel.

12. Procédé selon la revendication 11, **caractérisé par le fait que**, dans le cas des variantes (I) et (II), dans au moins une autre étape, on prépare au moins un composé (A) et/ou au moins un composé (B) dans les mélanges de produits des étapes précédentes.

13. Utilisation du mélange tel que défini à l'une des revendications 1 à 10 et/ou du mélange préparé par le procédé tel que défini à l'une des revendications 11 ou 12 pour la préparations de matières de revêtement, d'adhésifs ou de masses d'étanchéité durcissables par rayonnement actinique ou par rayonnement actinique et thermiquement.

14. Utilisation selon la revendication 13, **caractérisée par le fait que** les matières de revêtement, adhésifs ou masses d'étanchéité sont des poudres ou des granulés ou sont des poudres dispersées dans de l'eau et/ou dans des solvants organiques.

15. Utilisation selon la revendication 14, **caractérisée par le fait que** les adhésifs et les masses d'étanchéité sont des poudres, des granulés ou des poudres dispersées dans de l'eau et/ou dans des solvants organiques et les matières de revêtement sont des poudres ou des poudres dispersées dans de l'eau et/ou dans des solvants organiques.

16. Utilisation selon l'une des revendications 13 à 15, **caractérisée par le fait que** les matières de revêtement, les adhésifs et les masses d'étanchéité sont utilisées pour revêtir, coller ou étanchéifier :
- des véhicules automobiles, en particulier des véhicules utilitaires et des voitures de tourisme, et des parties de ceux-ci ;
- des bâtiments en intérieur et en extérieur ;
- du mobilier, des portes et des fenêtres ;
- des articles d'usage privé ou industriel, comprenant des bobines, des conteneurs et des composants électroniques.
